# DEMANDE DE BREVET EUROPEEN

(11) **EP 1 312 953 A2**
(43) Date de publication de la demande: **21.05.2003**
(21) Numéro de dépôt: 02292797.4
(22) Date de dépôt: 08.11.2002
(51) Int. Cl.: G02B 6/36

(54) **Répartiteur optique à haute densité et méthode pour le jarretièrage d'un tel répartiteur**

(30) Priorité: 13.11.2001 FR 0114958
(71) Demandeur: Nexans, 75008 Paris (FR)
(72) Inventeur: Thibault, Jean-Pierre, 78280 Guyancourt (FR); Vincent, Alain, 77230 Juilly (FR); Lepeuve, Alain, 78590 Noisy le Roi (FR); Joly, Bertrand, 92310 Sevres (FR); Lecomte, Didier, 84300 Cavaillon (FR)
(74) Mandataire: Feray, Valérie

(57) **Abrégé**

Le répartiteur et le procédé concernent une installation de télécommunications où des liaisons par fibres optiques sont reliées à des éléments de connexion comportés par des embases (6), réparties en face avant d'au moins une baie de répartition (11A, 11B) et où des jarretières (J) assurent les liaisons entre les éléments de connexion auxquels sont individuellement reliées les liaisons.
Un ensemble robotisé (33) d'outillages spécialisés assure :
- le montage d'une fiche à une extrémité d'une réserve de jarretière, stockée sous forme bobinée ;
- la mise en position de la fiche dans un élément de connexion d'une embase,
- la mise en place de la jarretière débobinée depuis cet élément jusqu'au niveau d'un autre élément,
- l'ajustement en longueur et la coupe d'un tronçon de jarretière débobinée,
- le montage d'une fiche à l'extrémité du tronçon et la mise en position de cette fiche dans ledit autre élément.

## Description

L'invention concerne un répartiteur optique plus particulièrement destiné à permettre les interconnexions qui sont à réaliser de manière sélective entre des liaisons par fibres optiques dans une installation de télécommunications comportant un nombre élevé de ces liaisons par fibres.

Elle concerne aussi un procédé destiné à permettre la réalisation du jarretièrage entre fibres par l'intermédiaire duquel ces interconnexions sont réalisées, au niveau d'un répartiteur optique à haute densité de points d'interconnexion, tel qu'envisagé ci-dessus.

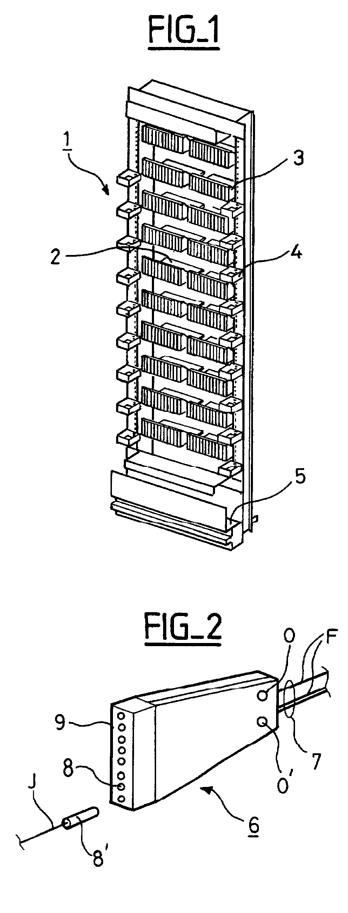

Un exemple de répartiteur optique pour installation de télécommunications est décrit dans le brevet américain 5497444. Il est illustré sur la figure 1 et il comporte une ossature 1, d'allure rectangulaire, qui porte une série de supports horizontaux 2 sur lesquels viennent se positionner des modules 3, qui sont répartis sur les supports de manière à constituer deux sous-ensembles verticaux parallèles. Chaque module est prévu pour accueillir plusieurs raccords, chaque raccord étant prévu pour permettre l'interconnexion de deux fibres, dont l'une est exploitée en tant que jarretière. Une telle interconnexion entre deux fibres s'effectue par l'intermédiaire de deux organes de connexion qui sont montés chacun à l'extrémité d'une fibre et qui viennent se positionner à l'opposé l'un de l'autre au niveau d'un raccord. Les organes de connexion des fibres servant de jarretières se positionnent devant les raccords dans le répartiteur alors que les organes de connexion des autres fibres qu'elles servent à interconnecter sont positionnés derrière. Des éléments de guidage et de support sont prévus pour permettre d'organiser la circulation des jarretières entre les raccords en tenant compte des besoins futurs en matière de réorganisation, ils sont représentés par des anneaux de passage fendus 4 et des goulottes 5, sur la figure 1.

Pour des raisons d'ordre et de sécurité, les jarretières circulent en général, soit horizontalement dans des goulottes horizontales et en particulier des goulottes associées aux supports horizontaux des modules, soit verticalement et plus particulièrement dans des anneaux fendus définissant un guide vertical à chacune des extrémités en largeur du répartiteur. Pour des raisons de standardisation, les jarretières optiques, qui sont usuellement produites en usine, sont généralement d'une longueur déterminée suffisante pour permettre un raccordement entre les éléments de connexion les plus éloignés du répartiteur et les jarretières unissant des éléments de connexion moins éloignés doivent être lovées de manière à loger dans le répartiteur leurs surlongueurs respectives. Ce logement s'effectue par exemple à l'intérieur ou au voisinage des guides verticaux et il doit donc être spécifiquement prévu.

Une telle solution qui a initialement été développée pour des jarretières constituées par des fils électriques, n'est pas satisfaisante, si le répartiteur à réaliser est un répartiteur à haute densité, de très grande capacité impliquant la mise en place d'un très grand nombre de jarretières optiques, par exemple dix mille ou plus, qui peuvent être fragiles et dont il faut éviter la détérioration, en particulier lors des modifications d'organisation.

Il devient alors préférable de prévoir une mise en place automatisée des jarretières, comme envisagé dans le brevet français 2648300, lorsque le nombre de jarretières à mettre en place est de l'ordre de celui donné à titre d'exemple ci-dessus et qu'en conséquence la gestion des surlongueurs et les interventions manuelles à réaliser dans un environnement à haute densité des organes de connexion deviennent des éléments prépondérants.

Le document de brevet US 6 157 766 décrit un répartiteur optique, à haute densité, pour l'interconnexion sélective de liaisons optiques par fibres au moyen de jarretières également constituées par des fibres optiques dans le cadre d'une installation de télécommunications.

Ce répartiteur comporte deux baies verticales dont les zones de connexion sont latérales, tournées l'une vers l'autre, et qui sont séparées l'une de l'autre par une zone recevant des jarretières, ces jarretières reliant les zones de connexion de chaque baie. Les zones de connexion sont pivotantes autour d'un axe horizontal latéral inférieur.

Un tel répartiteur pose le problème technique essentiel suivant : il est très encombrant.

En effet, tout d'abord, les jarretières sont prédécoupées à une longueur fixe et doivent être stockées dans un magasin non représenté dans ce document. Un tel magasin peut être d'un volume équivalent à celui du répartiteur.

Ensuite, compte tenu de la longueur et de la courbure admissible des jarretières, la zone recevant celles -ci doit être relativement large, ce qui augmente encore l'encombrement d'un tel type de répartiteur.

Un autre problème technique est relatif au fait que les zones de connexion sont mobiles et qu'en conséquence les fibres optiques sont déplacées lors de connexions. Ceci peut entraîner des perturbations des télécommunications.

L'invention résout ces problèmes et pour ce faire elle propose un répartiteur optique, à haute densité, pour l'interconnexion sélective de liaisons optiques par fibres au moyen de jarretières également constituées par des fibres optiques dans le cadre d'une installation de télécommunications où premièrement le répartiteur comporte des embases (6), qui sont disposées par rangées sur des éléments de support parallèles en une structure matricielle à deux dimensions et qui sont munies d'éléments de connexion individuels (8) pour les liaisons, et où deuxièmement chaque élément de connexion individuel d'une embase est agencé pour coopérer avec un élément de connexion complémentaire qui équipe l'extrémité d'une jarretière et qui vient se placer en face avant de l'embase, ledit répartiteur comportant au moins une baie de répartition (11A, 11B) sur un côté de laquelle est ménagée une zone (12) pour le passage des jarretières, celles-ci étant équipées d'éléments de connexion enfichables (8') à chacune de leurs extrémités afin de relier chacune un élément de jonction individuel d'une embase portée par un élément de support à un autre élément de jonction individuel d'une autre embase portée par un autre élément de support, ce répartiteur étant caractérisé en ce que lesdits supports d'embase sont montés en face avant de ladite baie de répartition (11A, 11B), ladite zone (12) de brassage étant ouverte vers l'avant pour recevoir les jarretières lors du jarretièrage qui est réalisé par un ensemble robotisé d'outillages spécialisés(33) apte à agir, se déplacer et se positionner par rapport aux embases de manière à assurer:
- le montage d'une fiche à une extrémité d'une réserve de jarretière optique, bobinée, exploitée pour constituer les jarretières,
- la mise en position de cette fiche dans un premier élément de connexion individuel d'embase déterminé d'une baie,
- la mise en place de la jarretière débobinée depuis ce premier élément de connexion individuel déterminé et au travers de la zone de brassage jusqu'au niveau d'un second élément de connexion individuel déterminé d'une autre embase,
- l'ajustement en longueur de la jarretière débobinée et sa coupe la transformant en un tronçon séparé du reste de la jarretière encore bobinée,
- la mise en place d'une fiche à l'extrémité coupée du tronçon de jarretière débobiné,
- la mise en position de la fiche nouvellement montée en extrémité de tronçon dans le second élément de connexion.

L'invention propose aussi un procédé de jarretièrage pour répartiteur optique permettant l'interconnexion sélective de liaisons optiques par fibres au moyen de jarretières également constituées par des fibres optiques dans le cadre d'une installation de télécommunications où le répartiteur comporte des embases, qui sont disposées par rangées, sur des éléments de support parallèles en face avant d'au moins une baie de répartition définissant en une structure matricielle à deux dimensions, et qui sont munies d'éléments de connexion individuels pour les liaisons Chaque élément de connexion individuel d'une embase est agencé pour coopérer avec un élément de connexion complémentaire enfichable qui équipe l'extrémité d'une jarretière et qui vient se placer en face avant de l'embase

Selon une caractéristique du procédé selon l'invention, la pose d'une jarretière entre deux éléments individuels de connexion appartenant à des embases différentes du répartiteur est réalisée par l'intermédiaire d'un ensemble robotisé d'outillages spécialisés qui assure la succession d'opérations suivantes :
- montage d'une fiche à une extrémité d'une réserve de jarretière optique bobinée, exploitée pour constituer les jarretières,
- mise en position de cette fiche dans un premier élément de connexion individuel d'une embase déterminée d'une baie,
- mise en place de la fibre de jarretière débobinée depuis ce premier élément de connexion individuel déterminé, jusqu'au niveau d'un second élément de connexion individuel déterminé d'une autre embase,
- ajustement en longueur de la jarretière débobinée et coupe pour la transformer en un tronçon séparé de la réserve de jarretière encore bobinée,
- mise en place d'une fiche à une extrémité du tronçon de jarretière débobinée
- mise en position de la fiche nouvellement montée en extrémité de tronçon dans le second élément de connexion.

Selon une caractéristique du procédé selon l'invention, il est prévu pour le déjarretièrage :
- retrait d'une des fiches de la jarretière à éliminer à l'aide de l'outillage de maniement de fiche après positionnement de cet outillage au niveau de l'organe de connexion individuel où se trouve la fiche à retirer,
- séparation de la fiche retirée de l'extrémité de la jarretière où elle était placée, par bris de la jarretière à proximité de cette extrémité au moyen de l'outillage de maniement de fiche,
- retrait de la seconde fiche de la jarretière à éliminer à l'aide de l'outillage de maniement de fiche après positionnement de cet outillage au niveau de l'organe individuel où se trouve la seconde fiche à retirer,
- traction sur la fibre pincée au niveau de ladite seconde fiche pour extraire cette fibre par un mouvement tendant à la faire coulisser au long du trajet où elle s'étendait et hors de la zone de brassage qu'elle traversait.

L'invention, ses caractéristiques et ses avantages sont précisés dans la description qui suit en liaison avec les figures évoquées ci-dessous.

La figure 1 correspond à une vue en perspective du répartiteur optique connu succinctement décrit ci-dessus.

La figure 2 présente un exemple d'une embase de connexion connue et d'une fiche, tels qu'envisagées dans un répartiteur selon l'invention.

La figure 3 présente une vue de face d'un répartiteur optique selon l'invention.

La figure 4 présente une vue de droite du répartiteur optique de la figure 2.

La figure 5 présente une vue partielle en perspective d'un détail de réalisation relatif au répartiteur illustré sur les figures 3 et 4.

Les figures 6 et 7 présentent une vue en perspective et une vue de dessus d'un exemple de bras de support pour embase de connexion d'un répartiteur optique selon l'invention.

La figure 8 présente une vue en perspective d'une cassette de lovage de fibre d'un répartiteur optique selon l'invention.

La figure 9 présente un schéma de principe relatif à un ensemble robotisé d'outillages spécialisés de jarretièrage, selon l'invention.

La figure 10 présente un schéma de principe d'un outillage de stockage et distribution de fibre pour ensemble d'outillages, selon l'invention.

Les figures 11 et 12 présentent un exemple schématique d'un outillage de maniement de fibre composé de deux sous-ensembles montrés chacun dans deux des positions prévues pour eux, en cours d'exploitation.

La figure 13 présente une vue de dessus partielle d'un outillage de montage de fibre sur fiche.

La figure 14 montre un outillage de maniement de fiche, un outillage de maniement de fibre et une partie de répartiteur incluant deux extrémités de goulottes voisines, les outillages étant dans une position qui autorise l'introduction d'une jarretière dans une fiche, pour une jarretière, de type fibre, en place dans l'une des goulottes.

La figure 15 montre un outillage de maniement de fibre en association avec la partie de répartiteur incluant deux extrémités de goulottes voisines qui est également montrée sur la figure 14.

La figure 16 présente une vue partielle détaillée d'une partie d'extrémité de répartiteur comprenant des goulottes et les différents guides de jarretière qui leur sont associés.

Un exemple d'embase optique multipoint 6, susceptible d'être précâblée est illustrée, à titre d'exemple sur la figure 2. Cette embase est prévue pour permettre le raccordement individuel d'un nombre donné de jarretières J, supposées composées d'une seule fibre optique dans l'exemple donné, à un nombre correspondant de fibres optiques F le plus généralement issues d'un même câble de transmission ou de distribution d'une installation. Les jarretières et les fibres auxquelles elles se connectent sont équipées d'éléments de connexion individuels complémentaires. Dans la réalisation envisagée ici, les jarretières sont supposées équipées de fiches mâles de connexion, individuelles, telle la fiche tubulaire rectiligne 8' montée en extrémité d'un tronçon de jarretière J sur la figure 2, alors que les fibres auxquelles ces fiches doivent se raccorder sont équipées d'éléments de connexion 8, complémentaires, ici alignés, qui débouchent au niveau d'une face, dite avant, 9 de l'embase, comme on le voit aussi sur la figure 2. Une embase permet par exemple de raccorder des fibres optiques faisant partie d'un même groupe 7 et par exemple d'un groupe 7 de huit fibres d'un câble. Chaque élément de connexion 8 est agencé pour recevoir d'une part, une fibre par exemple d'un câble et, d'autre part, une fiche terminant une fibre de jarretière, les deux fibres venant se positionner bout à bout l'une par rapport à l'autre. Les fiches de connexion se présentent par exemple sous la forme de fiches tubulaires, qui sont prévues pour être longitudinalement traversées chacune par une fibre de jarretière. Cette fibre vent se terminer au niveau d'une extrémité d'enfichage de la fiche qu'elle traverse et dans laquelle elle est immobilisée. Cette immobilisation est, par exemple obtenue par sertissage. L'extrémité d'enfichage est réalisée de manière connue en soi pour venir se positionner dans un conduit ménagé pour elle dans un élément de connexion 8, complémentaire, elle est susceptible d'être élastiquement retenue en position dans cet élément, après l'enfichage, si cela est considéré comme préférable. Selon une forme préférée de réalisation, il est prévu au moins un et préférablement deux repères de positionnement 0, 0' pour chaque embase, ces repères étant ici constitués par deux trous verticalement alignés, si l'on considère la face avant de l'embase comme étant dans un plan vertical de référence.

Il est bien entendu envisageable de mettre en oeuvre des jarretières qui soient différentes de celles envisagées ci-dessus et par exemple des jarretières constituées par des câbles comportant plusieurs fibres, des fibres sous isolation lâche ou serrée, des rubans multifibres dans le cadre d'un répartiteur selon l'invention. Des fiches et embases appropriées sont alors prévues pour ces différents cas. Connues en elles-mêmes elles ne seront pas décrites de manière détaillée ici.

Pour des raisons de simplification de l'exposé, les jarretières envisagées dans la suite de la description sont considérées comme composées chacune d'une seule fibre optique dans la suite de la description. Il doit cependant être entendu que l'invention se rapporte à un procédé de jarretièrage et à des répartiteurs susceptibles d'être mis en oeuvre avec des jarretières de différents types comme envisagé ci-dessus.

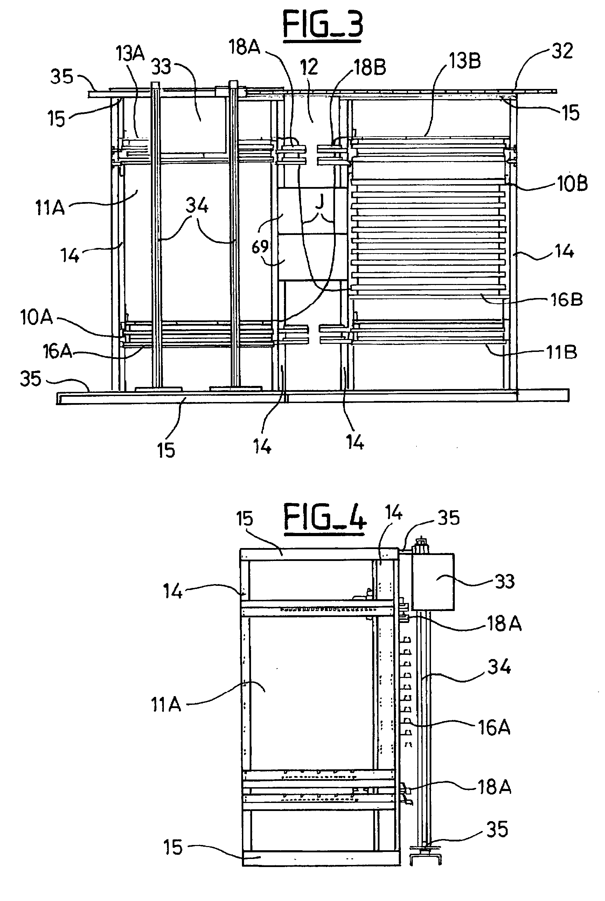

Un exemple non-limitatif de répartiteur optique pour installation de télécommunications, selon l'invention est présenté sur les figures 3 et 4. Il est supposé de grande capacité et à haute densité en éléments, ou points, de connexion et il comporte au moins une et ici deux baies de répartition alignées, telles 11A et 11B, qui comportent chacune un ensemble d'embases, tels qu'envisagées ci-dessus. Ces embases sont destinées à permettre une interconnexion sélective entre des fibres de câbles de transmission ou de distribution qui aboutissent au niveau du répartiteur, cette interconnexion étant réalisée par l'intermédiaire de jarretières dont les extrémités sont équipées de fiches compatibles avec les éléments de connexion que comportent les embases.

Dans l'exemple proposé, les deux baies 11A, 11B sont séparées l'une de l'autre par une zone de brassage 12 permettant le passage des jarretières reliant les embases comportées par l'une des baies avec ceux que l'autre comporte, les baies étant le plus généralement spécialisées, l'une étant par exemple affectée aux liaisons en départ et l'autre aux liaisons à l'arrivée.

Si le nombre de baies est plus grand que deux, il est bien entendu possible de prévoir le passage des jarretières, soit au niveau d'une zone de brassage unique entre deux des baies, soit dans des zones distribuées chacune entre deux baies, si besoin est. Il doit également être compris que dans un répartiteur constitué d'une seule baie, il est possible de prévoir une zone de brassage permettant une circulation verticale des jarretières sur au moins un des côtés de la baie.

Les embases sont supposées être du type de celle qui est montrée sur la figure 2, elles sont rassemblées par rangées dans des structures à allure matricielle où leurs faces avants sont préférablement disposées de manière coplanaire. Des moyens de repérage sont prévus pour permettre de connaître la position de chaque embase dans l'ensemble formé par toutes les embases du répartiteur et de chaque point appartenant à l'une de ces embases et correspondant à un élément de connexion individuel.

Comme également montré sur la figure 3, les embases sont disposées en rangées horizontales parallèles qui sont préférablement alignées d'une baie à l'autre, lorsqu'il y a plusieurs baies et qui sont identiquement référencées 10A ou 10B, suivant la baie qui les comporte, dans l'exemple présenté. Les embases 6 sont montées sur des profilés horizontaux que comportent chacune des baies au niveau d'une face, dite avant, deux de ces profilés respectivement référencés 13A et 13B étant montrés, sans embase, sur la figure 3. Les rangées parallèles d'embases s'interrompent au niveau de la zone de brassage 12 qui sépare les baies voisines.

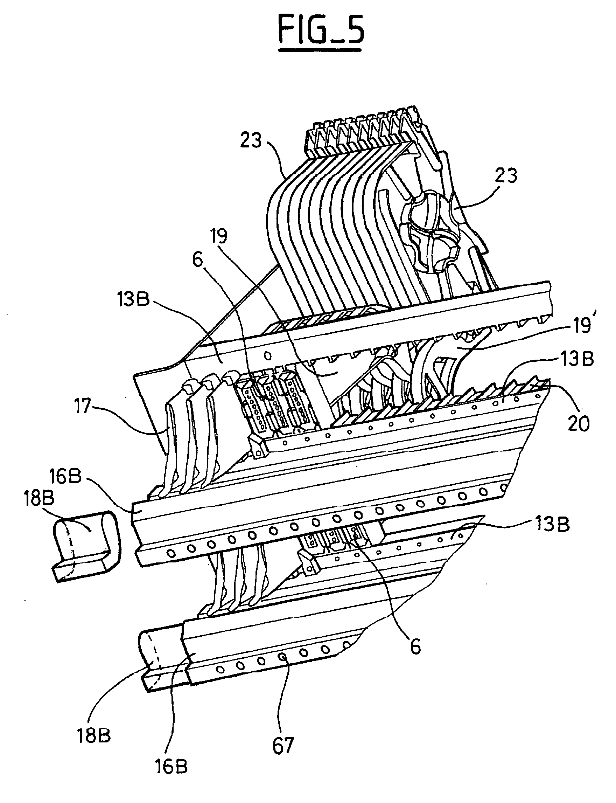

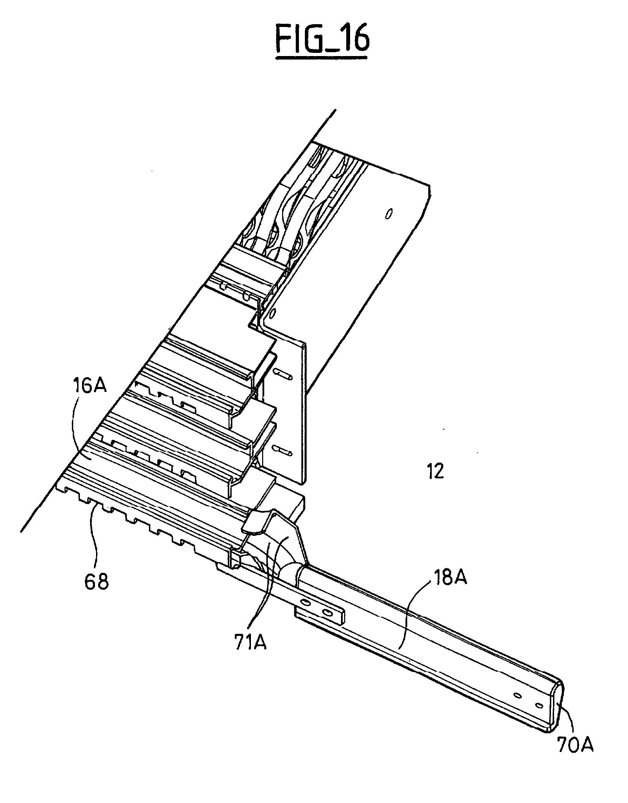

Les moyens de repérage des positions des embases qui sont prévus au niveau du répartiteur sont par exemple constitués par des ouvertures régulièrement espacées au pas des embases sur les profilés horizontaux où sont montées ces embases, ou éventuellement sur des éléments du répartiteur qui sont fixement associés à ces profilés et par exemple des goulottes horizontales individuellement associées à ces profilés. Ces moyens de repérage sont par exemple des trous 67 régulièrement ménagés dans les profilés ou dans les goulottes, comme illustré pour les profilés 13B ou les goulottes 16B sur la figure 5. Ils peuvent aussi se présenter sous la forme d'encoches 68 régulièrement réalisées au long de ces profilés ou goulottes, comme illustré sur la figure 16, ou encore de repères optiques, par exemple de type mire ou code barre.

Le raccordement, aux embases 6, des fibres issues des différents câbles de transmission et de distribution, implique l'utilisation de moyens matériels spécifiques qui sont ici organisés en modules de distribution et connexion. Ces modules se présentent sous la forme de cassettes individuellement articulées sur des éléments individuels de support ici réalisés sous la forme de bras. Ils se logent dans le volume intérieur propre à chacune des baies de telle sorte que les embases, qu'ils portent, aient leurs faces avants coplanaires. Les volumes intérieurs propres aux baies sont délimités par l'ossature de poutrelles servant d'éléments de support et de liaison au répartiteur, telles les poutrelles verticales 14 et horizontales 15 des baies 11A et 11B, sur les figures 3 et 4. Dans l'exemple de réalisation envisagé, les profilés 13A et 13B, qui supportent les rangées d'embases, sont fixées sur les poutrelles verticales 14 encadrant la face avant de la baie qui les comportent. Une goulotte horizontale est associée à chaque rangée d'embase, ces goulottes étant identiquement référencées 16A ou 16B pour les différentes rangées, sur la figure 3, suivant la baie, soit ici 11A ou 11B, qu'elles équipent.

Chacune de ces goulottes 16A ou 16B est destinée à recevoir les fibres optiques constituant les jarretières qui viennent se raccorder aux éléments de connexion 8 des embases 6 dont les alvéoles sont situées immédiatement au-dessus, comme le montre la figure 5 pour une des goulottes 16B. Des éléments guide-jarretières 17 sont fixés sur les profilés de support des embases de manière à courir de haut en bas le long des alvéoles des éléments de connexion 8 de chaque embase 6, au-dessus de chaque goulotte horizontale. Ces éléments sont agencés pour permettre de guider chaque jarretière entre la goulotte où elle vient reposer et l'une des alvéoles d'une embase située immédiatement au-dessus de cette goulotte.

Ces éléments guide-jarretières 17 sont réalisés de manière à faciliter la dépose des jarretières dans les goulottes et leur ajustement en longueur et tension, en évitant les croisements entre jarretières voisines, à leur niveau. Ils sont ici légèrement recourbés de manière à guider les fibres qui les parcourent dans la goulotte horizontale qu'ils surplombent et vers la zone de brassage 12, située au centre du répartiteur dans l'exemple de réalisation présenté. La zone de brassage 12 ménagée entre baies voisines, telles que 11A et 11B, est ici supposée dimensionnée pour permettre le passage de la totalité des jarretières qui sont susceptibles d'être mises en place pour relier, chacune, un élément de connexion 8 d'une embase 6 d'une baie à un élément de connexion d'une embase de l'autre baie. Cette mise en place est prévue quelles que soient les positions respectives des éléments, des embases qui les comportent, et des goulottes associées à ces embases dans les baies.

Lorsque deux éléments de connexion, faisant partie d'embases qui sont situées à des hauteurs différentes dans deux baies qui les comportent, sont reliés par une jarretière, celle-ci circule dans une zone de brassage 12, de manière à passer du niveau vertical de la goulotte qui dessert l'une des embases à celui de la goulotte qui dessert l'autre. L'ensemble constitué par les jarretières transitant par une zone de brassage 12 est maintenu dans une position déterminée à l'intérieur de cette zone 12, par l'intermédiaire de guides ici dits généraux, tels 18A ou 18B chargés d'assurer un maintien et une protection des jarretières. Ces guides généraux ont ici supposés réalisés sous la forme d'éléments de forme allongée formant des bras qui sont portés par des baies voisines de manière à venir partiellement clore la zone de brassage 12 tout en ménageant centralement un passage d'orientation verticale entre eux pour permettre l'introduction de fibres dans la zone, comme on le voit sur la figure 3, pour l'exemple de réalisation présenté.

Les guides généraux sont ici supposés associés par paire, les deux guides généraux d'une paire étant respectivement montés à un même niveau vertical de part et d'autre d'une zone de brassage 12 ménagée entre deux baies voisines. Dans l'exemple de réalisation illustré sur la figure 5, les deux guides généraux 18B qui sont représentés, sont situés chacun dans le prolongement du bord avant d'une goulotte 16B. Ils sont prévus pour maintenir dans la zone de brassage 12, les jarretières qui circulent verticalement à leurs niveaux respectifs et qui transitent par des goulottes de la baie comportant la goulotte dans le prolongement de laquelle chacun d'eux est respectivement situé. Des plaques de fermeture 69 portées par des poutrelles de l'ossature du répartiteur limitent la zone de brassage 12 derrière les guides généraux, comme le montre la figure 3.

Dans une forme préférée de réalisation plus particulièrement illustrée sur la figure 16, les bras formant les guides généraux, tel celui que forme le guide général 18A sont agencés pour faciliter une mise en place appropriée des jarretières en phase de jarretiérage et leur maintien en place après pose. Les jarretières sont à cet effet amenées en contact avec un galbe longitudinal 70A réalisé sur la partie de guide général qui est orientée vers l'intérieur de la zone de brassage ménagée entre baies dans la réalisation proposée. Ce galbe longitudinal sert à repousser transistoirement les jarretières vers l'arrière en phase d'installation. Une continuité est réalisée entre l'extrémité d'une goulotte, telle l'une des goulottes 16A de la figure 16, qui débouche au niveau de la zone de brassage et le guide général 18A associé à cette goulotte, par l'intermédiaire d'un guide-toron, tel que 71A, chargé de guider les jarretières d'une goulotte par rapport au guide général associé à cet goulotte au niveau de la zone de brassage 12. Chaque guide-toron supporte en permanence les jarretières à l'entrée de la goulotte dans le prolongement de laquelle il est situé.

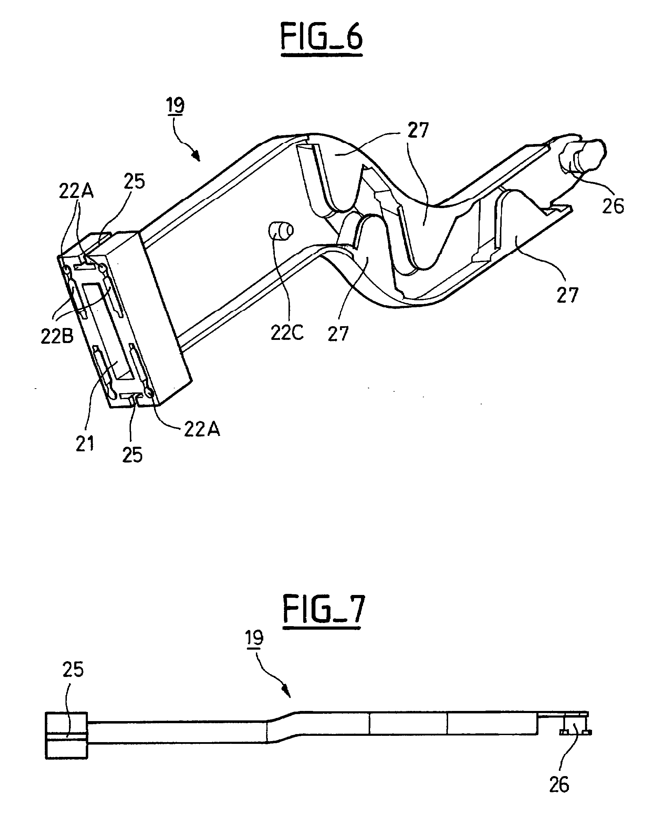

Comme indiqué plus haut, dans l'exemple de réalisation envisagé, les embases 6 sont portées par des bras individuels de support qui sont fixés côte à côte sur les profilés horizontaux, comme les bras de support 19 et 19' qui sont partiellement visibles sur la figure 5 et dont l'un est détaillé sur la figure 6. Chacun de ces bras de support comporte un logement s'ouvrant à une de ses extrémités qui est agencé pour lui permettre de recevoir une embase, il est ici prévu que les bras de support viennent se fixer sur les profilés horizontaux de support d'embases, comme illustré sur la figure 5 pour les bras 19, 19'. Les profilés tels que 13A, 13B, sont réalisés de manière à permettre un positionnement des bras et en conséquence des embases, comme symbolisé par les nervures 20 présentes sur les deux profilés 13B, situés en position haute sur la figure 5.

Une forme de réalisation d'un bras de support 19 est illustré sur les figures 6 et 7, comme indiqué plus haut, ce bras comporte un logement central 21 ménagé à une première de ses extrémités pour recevoir une embase 6 qui vient s'y positionner avec précision de manière que la face avant et les alvéoles des éléments de connexion que cette embase comporte, soient dans des positions prédéterminées. A partir du moment où il est prévu un jarretièrage automatisé entre éléments de connexion d'embases différentes, il est nécessaire de disposer de moyens permettant d'obtenir le positionnement des fiches qui terminent les jarretières dans les conduits des éléments de connexion 8 où ces fiches doivent venir s'insérer.

Dans la forme de réalisation proposée, il est prévu des moyens au niveau de l'extrémité d'un bras de support qui comporte un logement central 21 pour coopérer avec des moyens complémentaires prévus au niveau d'un dispositif par l'intermédiaire duquel une fiche est positionnée devant l'alvéole d'élément de connexion 8 dans laquelle elle doit être introduite. Dans la réalisation présentée, les moyens prévus au niveau de l'extrémité d'un bras support sont des formes creuses destinées à recevoir des formes pleines complémentaires, ces formes sont choisies pour permettre d'obtenir la précision de positionnement nécessaire à l'introduction d'une fiche en position de connexion dans un conduit d'un élément de connexion dont la position dans le répartiteur a été prédéterminée. Dans une première variante de réalisation, les moyens prévus au niveau de l'extrémité d'un bras de support sont constitués sous la forme de cavités cylindriques 22A qui sont ménagées à la première extrémité de chaque bras et latéralement prolongées chacune par une fente 22B d'orientation déterminée. L'embase 6 est immobilisée dans le bras dans une position déterminée, ce positionnement étant confirmé par un détrompeur 22C intérieurement ménagé au niveau du bras de manière à pénétrer dans un des trous 0 ou 0' qui constituent les repères de positionnement d'une embase 6, lorsque cette embase est dans la position prévue pour elle dans le bras, le trou à utiliser étant prédéterminé.

Dans l'exemple présenté, il est prévu quatre cavités cylindriques 22A disposées autour de l'ouverture du logement 21 prévu pour une embase 6 à la première extrémité d'un bras de support 19. Ces cavités 22A sont reliées deux à deux par une fente 22B qui leur est commune et qui est orientée parallèlement à laxe d'alignement prévu pour les alvéoles des éléments de connexion 8 de l'embase 6 venant se loger dans le bras représenté. Une tige de centrage, préférablement cylindrique et dont le diamètre correspond alors à celui d'une cavité 22A, sert de forme pleine complémentaire pour le dispositif prévu pour permettre le positionnement d'une fiche. Cette tige de centrage, non représentée, se prolonge latéralement par une partie saillante dont les dimensions correspondent à celles d'une fente 22B où elle vient se positionner, lorsque la tige qui la porte est dans une cavité 22A, de manière à fournir une indication précise de positionnement au dispositif qu'elle équipe. Il est ici prévu quatre cavités cylindriques 22A et deux fentes 22B par bras de support.

Dans une seconde variante de réalisation, le placement précis du dispositif de positionnement de fiche est susceptible d'être obtenu par rapport à une des cavités cylindriques 22A qui sont disposées autour de l'ouverture de logement 21 d'un bras de support 19. A cet effet, le dispositif de positionnement est mécaniquement déplacé de manière à se positionner d'une manière prédéterminée par rapport au répartiteur ou plus précisément à un élément de connexion 8 d'une embase 6 précisément positionnée dans une des baies du répartiteur. La pénétration de la tige de centrage du dispositif de positionnement de fiche dans une cavité cylindrique 22A déterminée est alors susceptible d'être exploitée de manière accessoire pour un prépositionnement de l'outil de ce dispositif qui sert à insérer une fiche dans le conduit d'un élément de connexion 8 déterminé d'une embase 6 déterminée. L'outil est alors réalisé de manière que la fiche soit dotée d'une certaine possibilité d'accommodation et possède une relative liberté de mouvement latéral à l'insertion. Cette possibilité est par exemple la conséquence de la présence d'un ou de plusieurs ressorts au niveau de la fixation dudit outil, sur le dispositif qui le porte.

Dans la forme de réalisation envisagée ici, le bras est doublement coudé en sens inverse à au moins approximativement mi-longueur et dans deux dimensions, comme le montrent les figures 6 et 7, ses deux extrémités étant en conséquence décalées l'une par rapport à l'autre, cet arrangement est destiné à permettre un montage à haute densité des bras 19,19', des embases 6 et des cassettes 23 de lovage des fibres constituant les jarretières, au niveau d'un répartiteur, comme illustré sur le détail de réalisation de la figure 5.

Dans une forme préférée de réalisation, la première extrémité d'un bras vient coopérer avec deux profilés de support immédiatement voisins d'une baie entre lesquels elle s'enfiche. A cet effet, elle comporte deux fentes de positionnement 25 disposées de manière à coulisser sur des nervures 20 en regard de même niveau horizontal qui sont comportées par les profilés de support entre lesquels vient s'insérer ladite première extrémité de bras, les fentes étant montrées sur les figures 6 et 7, les nervures sur la figure 5.

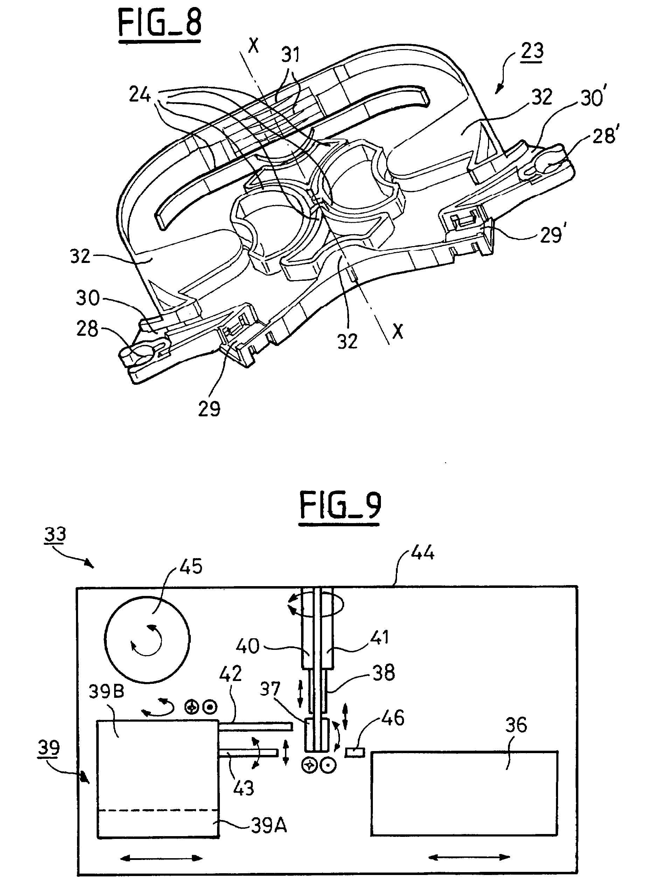

La seconde extrémité d'un bras comporte un élément d'articulation 26 qui est ici constitué par un axe latéral destiné à être horizontal, lorsque le bras est en place dans un répartiteur. Cet élément d'articulation 26 est destiné à servir de support à une cassette, telle que succinctement évoquée plus haut, qui comporte à cet effet un élément d'articulation complémentaire, ici du genre portée pour axe, comme on le voit sur la figure 8.

La structure doublement repliée qui joint les deux extrémités d'un bras est ici supposée constituée par un corps creux délimitant un canal latéral en U qui se termine par le logement 20 d'une embase 6 à une extrémité et par un prolongement du fond du U qui porte l'axe d'élément d'articulation 26. Ce canal latéral est prévu pour permettre le passage du groupe 7 de fibres qui relient les éléments de connexion d'une embase 6 à une cassette de lovage. Il est ici doté d'un labyrinthe qui est constitué par des pattes de maintien 27 s'étendant au-dessus du fond du canal, depuis les deux rives duquel ces pattes saillent alternativement d'une rive vers l'autre, de manière à assurer le maintien des fibres dans le canal après qu'elles y aient été introduites. Dans une forme préférée de réalisation, la dimension de l'extrémité du bras et ici de sa face avant, selon une direction parallèle aux profilés 13B entre lesquels il se positionne, est choisie double de la largeur L des autres parties du bras et de la cassette selon cette même direction. Cet arrangement permet un gain en matière de densité d'embases dans la mesure où il permet d'alterner des structures appartenant à des bras de support sur lesquels sont montées des embases 6 disposées dans deux rangées immédiatement voisines, lorsque les embases de ces rangées se fixent les unes au-dessus, les autres au-dessous d'un même profilé 13A ou 13B insérés entre elles, les bras correspondants ayant leurs éléments d'articulation 26 respectifs alternativement situés soit au-dessus, soit au-dessous des embases que porte le bras, lorsque les embases sont positionnées dans le répartiteur. Dans la forme de réalisation envisagée, cette alternance se traduit aussi par des orientations alternées des canaux et des éléments d'articulation des bras de support alternés relatifs à deux rangées d'embases immédiatement voisines. Les axes d'articulation respectifs 26 des différents bras montés de part et d'autre d'un même profilé se trouvant alors tous dans le même alignement où ils se font face deux par deux.

Une forme préférée de réalisation d'une cassette de lovage 23 pour fibres d'un faisceau est présentée sur la figure 8, cette cassette est usuellement moulée et réalisée en matériau isolant de manière à former un boîtier ouvert, à fond plat et ici d'allure symétrique, par rapport à un plan médian transversal de trace XX. Ce boîtier est prévu pour être clos par le fond d'un boîtier, identique ou similaire, plaqué contre lui, ceci étant plus particulièrement réalisé lorsque les cassettes sont en position normale d'exploitation dans le répartiteur. La cassette proposée est de forme approximativement rectangulaire dans la mesure où elle dispose de deux coins symétriquement arrondis au niveau d'un de ses deux grands côtés et de deux portées d'axe 28, 28', en saillie, qui sont symétriquement disposées par rapport au plan médian transversal XX, au niveau de l'autre de ces seconds grands côtés. Elle présente une épaisseur hors tout qui est choisie à la largeur L de bras, évoquée plus haut, de manière qu'il soit possible d'accoler sur une même longueur considérée au long d'un profilé de support un nombre de cassettes correspondant au nombre de bras de support alternés et donc au nombre d'embases portées par ces bras, ces embases étant alternativement réparties au-dessus ou au-dessous du profilé considéré, comme il est montré sur la figure 5.

Les portées 28, 28' d'une cassette sont prévues pour venir s'enfourcher l'une ou l'autre sur un axe d'élément d'articulation 26 comporté par un bras de support 19, afin de solidariser ce bras et la cassette. Elles sont symétriquement réalisées chacune sous la forme d'une pince, en forme de C, apte à venir élastiquement se positionner en force autour d'un axe d'élément d'articulation 26 de bras de support, de manière à permettre ultérieurement une rotation de la cassette par rapport à cet axe et éventuellement une dissociation de la cassette et du bras de support par traction sur la cassette. La présence d'une portée 28 ou 28' à chacune des deux extrémités d'une cassette n'est pas indispensable, elle offre l'avantage de permettre d'aligner des cassettes de manière à ce qu'elles aient toutes leurs ouvertures orientées dans un même sens choisi, lorsqu'elles sont montées sur des bras de support dont les axes d'élément d'articulation sont alignés. L'un des sens est alors donné par le montage des cassettes avec leurs portées 28 respectives entourant chacune un des axes alignés, l'autre sens est alternativement obtenu, lorsque les cassettes ont leurs portées 28' respectives entourant chacune un des axes alignés.

Dans l'exemple de réalisation, tel que proposé sur la figure 5, les cassettes alignées, qui sont représentées, sont articulées sur les bras de support 19, 19' par l'intermédiaire de leurs portées 28 respectives et le fond de l'une obture l'ouverture de la suivante. Ces cassettes alignées sont alternativement portées les unes par des bras de support dont les éléments d'articulation 26 respectifs, non représentés sur la figure 5, sont positionnés plus bas que les embases 6 qu'ils portent, dans le répartiteur et les autres par des bras de support dont les éléments d'articulation 26 respectifs se trouvent être plus hauts que les embases 6 qu'ils portent. Une cassette vient se loger soit au-dessus d'un bras de support contre lequel elle vient se plaquer par celui de ses petits côtés au niveau duquel se trouve la portée par laquelle elle est articulée sur ce bras, lorsque ce dernier a son élément d'articulation au-dessus de l'embase 6 qu'il comporte, lorsqu'il est en place dans le répartiteur. Une cassette vient alternativement s'encastrer dans le creux de coude qui se trouve à proximité de l'élément d'articulation du bras de support sur lequel elle est articulée, lorsque ce bras a son élément d'articulation au-dessous de l'embase 6 qu'il comporte, lorsqu'il est en place dans le répartiteur. Les dimensions choisies pour les éléments constitutifs des bras de support et des cassettes qui sont amenés à coopérer, lorsque les bras sont en place dans le répartiteur et que les cassettes leur sont associées, sont donc choisies, de manière connue en soi, pour que les cassettes d'un alignement soient rangées de la même manière, alors que les bras de support qui les portent sont disposés selon l'agencement alternatif défini ci-dessus. L'articulation d'une cassette sur un bras support fixé dans un répartiteur permet de la déplacer entre des positions qui correspondent l'une à une position normale d'exploitation pour laquelle elle est insérée entre deux autres cassettes avec lesquelles elle est alors alignée, ces cassettes étant portées par des bras de répartiteur montés différemment de celui sur lequel elle est articulée et une position propice aux interventions pour laquelle elle est quasi totalement sortie de l'alignement de cassettes dans lequel elle est normalement incorporée.

Par ailleurs, chaque cassette 23 comporte des structures de lovage 24 prévues pour recevoir des fibres optiques, qui sont illustrées sur la figure 8. Pour une même cassette, ces fibres optiques comprennent, d'une part, des fibres appartenant à un groupe de fibres issu d'un câble de transmission ou de distribution soumis à répartition, d'autre part des fibres intermédiaires de liaison des fibres précédentes aux éléments individuels de connexion 8 de l'embase 6 qui est portée par le bras de support sur lequel la cassette est articulée. Les structures de lovage 20 d'une cassette sont formées par des parois internes en saillie sur le fond de cette cassette qui sont disposées, de manière connue de l'homme de métier, pour éviter tout risque de cassure aux longueurs de fibre optiques que l'on prévoit de lover dans la cassette.

Deux conduits séparés sont prévus pour permettre aux fibres d'un groupe et aux fibres intermédiaires de liaison de pénétrer dans une cassette dans la zone où cette cassette s'articule sur l'élément d'articulation 26 du bras de support qui la porte. Dans la réalisation présentée où la cassette présente une symétrie par rapport à un plan médian, deux conduits 29 et 30 ou 29' et 30' s'ouvrent latéralement aux extrémités de la cassette, dans les petits côtés de cette cassette et de part et d'autre de chacune des portées d'axe 28 ou 28', seuls étant utilisés les canaux qui sont proches de la portée d'axe par l'intermédiaire de laquelle la cassette est portée par un bras de support.

Les conduits 29 et 29' d'une cassette sont agencés pour permettre aux fibres d'un groupe de pénétrer dans la cassette, afin d'y être raccordées chacune à une fibre intermédiaire de liaison, par l'intermédiaire d'épissures, non représentées.

Il est prévu d'équiper d'un auxiliaire d'immobilisation de fibres, celui des conduits par l'intermédiaire duquel passent les fibres d'un groupe pour pénétrer dans une cassette. Cet auxiliaire d'immobilisation est par exemple un cavalier d'amarrage, encliquetable, tel que décrit en liaison avec la figure 4, dans la demande de brevet français 2789497, prévu pour permettre l'immobilisation d'au moins une gaine protectrice tubulaire dans laquelle est placé tout ou partie d'un groupe de fibres, tel qu'envisagé ci-dessus.

Les conduits 30 et 30' d'une cassette sont agencés pour permettre aux fibres intermédiaires de liaison circulant dans le canal en U d'un bras de support de pénétrer dans une cassette 23, articulée sur ce bras au niveau de l'une de ses portées d'axe, par celui de ces conduits qui voisine cette portée, sans risque de pliure et donc de cassure, quelle que soit la rotation de la cassette autour de l'axe de l'élément d'articulation du bras de support qui la porte. Une telle rotation est ici possible entre la position d'exploitation et une position limite d'intervention qui est supposée mécaniquement fixée par butée d'une partie de la cassette contre une partie du bras sur lequel cette cassette est articulée.

Dans la réalisation proposée, il est prévu que les fibres d'entrée/sortie et les fibres intermédiaires de liaison reliées entre elles au niveau d'une cassette pénètrent par des canaux 29 et 30, ou 29' et 30', qui leur sont réservés de part et d'autre d'une même portée d'axe 28 ou 28' de la cassette. Le conduit 30 ou 30', par lequel pénètrent les fibres intermédiaires de liaisons, est disposé de manière à s'ouvrir au long du prolongement, portant l'élément d'articulation 26 ou 26' du bras de support contre lequel vient s'appliquer la cassette, lorsque celle-ci est en position d'exploitation. Ce prolongement laisse à cet effet subsister un vide autour de l'élément d'articulation qu'il porte, ce vide pouvant être exploité pour le passage de fibres, lorsqu'une cassette est montée sur cet élément.

Comme connu, l'épissurage d'une fibre d'un groupe à une fibre intermédiaire de liaison peut être réalisé par divers moyens dont la forme extérieure est usuellement tubulaire et dont le maintien en position dans la cassette est classiquement réalisé par un empilage de languettes élastiques 31 entre lesquelles viennent s'immobiliser les diverses épissures entre fibres. Le maintien des parties de fibres contenues dans une cassette est classiquement complété au moyen de pattes de maintien 32 saillant des parois de la cassette parallèlement à son fond de manière à partiellement couvrir les parties de cette cassette où sont susceptibles de se positionner les fibres, lorsqu'elles sont lovées.

Au moins une partie des embases 6 prévues au niveau d'au moins deux des baies, telles 11A et 11B sur la figure 3 est initialement mise en place avant toute opération de jarretièrage au niveau du répartiteur qui comporte ces baies. Dans la mesure où le nombre d'embases prévues dans un tel répartiteur est particulièrement élevé, il est prévu de réaliser les opérations de jarretièrage de manière automatique au moyen d'un ensemble robotisé 33 d'outillages spécialisés, apte à se déplacer devant les baies que comporte le répartiteur pour permettre aux organes d'intervenir dans le cadre des opérations nécessaires à la réalisation du jarretièrage et à son évolution au cours du temps pour chacun des points comportés par les embases 6 qui sont disposées en face avant des baies.

L'ensemble 33 est ici supposé prévu pour se déplacer selon deux directions d'un plan parallèle au plan de référence que définissent les faces avants des embases à l'avant des baies. Il est par exemple monté mobile en translation sur un support vertical 34 qui est lui-même prévu mobile en translation dans le sens horizontal et qui comporte en conséquence des moyens de déplacement, ici supposés motorisés et pilotés par une logique de gestion programmée, non représentée, apte à superviser les opérations de jarretièrage et d'évolution du jarretièrage évoquées ci-dessus pour l'ensemble du répartiteur. Le guidage du support vertical 34 lors de ses déplacements horizontaux est par exemple guidé par des rails 35 respectivement disposés en haut et en bas du répartiteur parallèlement au plan de référence défini plus haut, comme on le voit sur les figures 3 et 4.

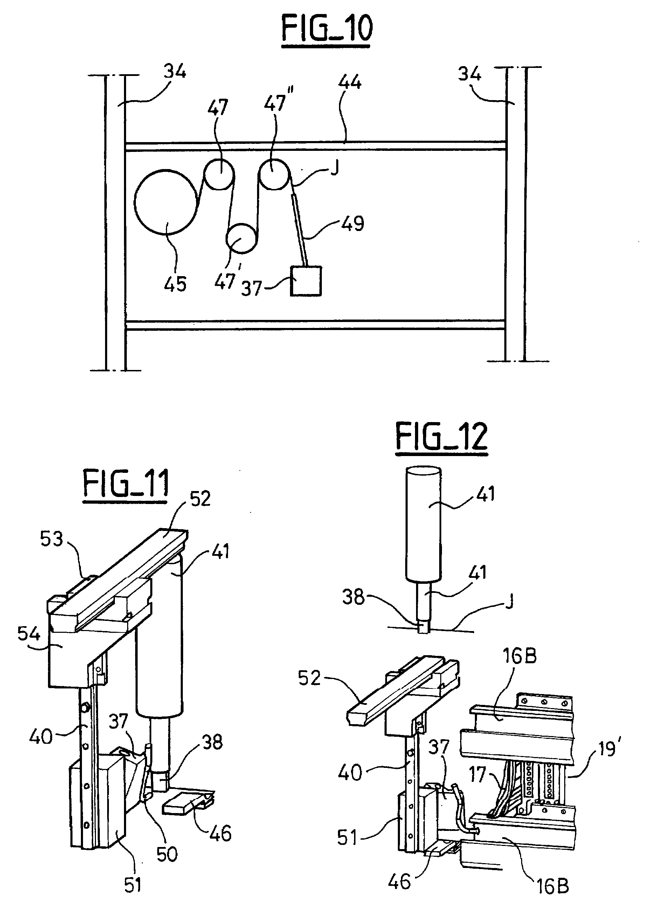

L'ensemble robotisé 33 d'outillages spécialisés de jarretièrage, présenté sur la figure 9, est supposé logé dans un châssis métallique 44, ayant la forme d'un cadre rectangulaire, qui est disposé verticalement de manière à pouvoir se déplacer devant les faces avants des baies où apparaissent les faces avants des embases, dans les conditions indiquées ci-dessus. Il est supposé placé sous le contrôle de la logique de gestion programmée, qui n'est pas détaillée ici et il comporte essentiellement :
- un outillage de stockage-distribution servant de réserve de fibre optique de jarretière, symbolisé par une bobine 45 ;
- un dispositif de stockage de fiches d'embout de fibres, non représenté ici ;
- un outillage multifonctions 36 de raccordement de fiche sur fibre, prévu pour réaliser les différentes opérations nécessaires au montage d'une fiche à une extrémité d'une fibre et en particulier l'ajustement en longueur de la fibre et sa coupe ;
- un outillage de maniement de fibre, composé de deux sous-ensembles respectivement chargés de distribuer la fibre de manière déterminée au cours des diverses opérations liées au jarretièrage et de la saisir, plus particulièrement à proximité d'une extrémité pour orienter et/ou positionner cette extrémité d'une manière prédéterminée; le premier sous-ensemble se caractérise par la présence d'une tête mobile de distribution 37 équipée d'une buse par l'intermédiaire de laquelle la fibre est fournie; le second sous-ensemble comporte une pince 38 mobile en hauteur et partiellement rotative qui permet de saisir la fibre et d'en modifier le positionnement dans l'espace ;
- un outillage de maniement de fiche 39, permettant de saisir une fiche et de la déplacer, en particulier en phase de raccordement d'une fibre équipée d'une telle fiche à un élément de connexion déterminé que comporte le répartiteur, l'opération de raccordement s'effectuant par insertion de la fiche, montée à une extrémité de la fibre, dans l'élément de connexion. L'outillage de maniement de fiche est également agencé pour permettre les opérations de déconnexion qui sont à réaliser dans le cas d'un retrait d'une fibre de jarretière précédemment mise en place.

L'outillage multifonctions 36 est par exemple du genre de celui qui est décrit dans la demande de brevet français déposée sous le numéro 9616188 qui est notamment prévu pour assurer la coupe et le dénudage d'une fibre optique de jarretièrage.

Dans l'ensemble d'outillages spécialisés 33 proposé, il est prévu que. l'outillage de raccordement de fiche sur fibre 36 et l'outillage de maniement de fiche 39 soient disposés au bas du châssis 44, de manière à pouvoir se déplacer chacun d'une des deux extrémités longitudinales de ce châssis mobile vers sa partie centrale.

Ces outillages sont par exemple portés chacun par une platine de support différente, les deux platines, non représentées se déplaçant au long d'une voie commune composée de rails longitudinaux de support, comme symbolisé par fléchage sur la figure 9.

Les déplacements longitudinaux de l'outillage de raccordement 36 et de l'outillage de maniement de fiche 39 permettent à ses outillages de se rapprocher ou de s'éloigner de la partie centrale du châssis 44 où sont localisés les deux sous-ensembles de l'outillage de maniement de fibre, ceux-ci étant vus l'un devant l'autre sur la figure 9.

Le sous-ensemble équipé de la tête de distribution 37 comporte un bras porteur 40 qui est tenu par un dispositif qui lui permet de se déplacer selon deux directions, l'une verticale et l'autre horizontale par rapport au châssis 33 en partie centrale haute duquel ledit bras est attaché. Le déplacement horizontal s'effectue perpendiculairement au plan de la figure, comme symbolisé par la pointe et la queue de flèche présentes sous la tête de distribution 37 sur la figure 9. Ce plan de figure correspond au plan de déplacement du châssis qui est parallèle au plan de référence défini plus haut. Le déplacement vertical du bras porteur 40 se traduit par celui de la tête de distribution mobile 37 par rapport au châssis 44, dans la réalisation proposée. Ces deux déplacements conjoints du bras et de la tête sont ici symbolisés par le fléchage vertical situé à droite de la tête mobile sur la figure 9. Un déplacement de cette tête mobile par rapport à un bras porteur fixe peut alternativement être réalisé, il est mentionné ici à titre de variante et il ne sera pas développé dans la suite de la présente description.

Une rotation partielle de la tête de distribution 37 par rapport au bras support est également prévu, il est symbolisé par le fléchage curviligne qui entoure cette tête sur la figure 9.

Les déplacements du bras de support 40 et de la tête de distribution 37 s'effectuent de l'autre côté du sous-ensemble incluant la pince 38 par rapport au plan de référence, lorsque le châssis 44 est équipé et qu'il est en place par rapport aux baies du répartiteur, comme représenté sur les figures 3 et 4, pour ledit ensemble 33.

Comme indiqué ci-dessus, le second sous-ensemble de l'outillage de maniement de fibre comporte un organe constituant une pince 38 agencée pour permettre de saisir latéralement une fibre de jarretière. Cette pince est ici positionnée à l'extrémité inférieure d'un élément de support 41 lui permettant de venir chevaucher par le dessus la fibre à pincer, en laissant libre les extrémités de fibre. La pince 38 est contrôlée par l'intermédiaire de moyens de servocommande prévus pour lui permettre de saisir et de relâcher une fibre en fonction d'un programme de commande déterminé, en phase d'exploitation de l'ensemble d'outillages 33. Les moyens de servocommande sont par exemple de type à commande pneumatique et ils sont pilotés par la logique de gestion via une interface appropriée.

L'élément de support 41 est tenu, par un dispositif, non représenté sur la figure 9, qui permet un déplacement vertical de la pince 38 par rapport au châssis en partie haute duquel le dispositif est attaché. Il est prévu une rotation partielle servocommandée de la pince 38 selon un axe vertical, comme schématisé par le fléchage curviligne présent en haut de l'élément de support sur la figure 9. Les déplacements verticaux de la pince sont symbolisés par le fléchage rectiligne présent à gauche de cette pince 38. La rotation partielle est ici prévue pour permettre de changer l'orientation de la fibre à angle droit. Bien entendu, il est envisageable de déplacer la pince tant en rotation qu'en translation verticale soit par une action servocommandée directe, soit éventuellement par une action servocommandée affectant l'élément de support 41 en bout duquel cette pince est montée, dans une variante de réalisation.

Comme indiqué plus haut, l'outillage de maniement de fiche 39 est mobile en translation longitudinale dans la partie inférieure du châssis, du fait de son montage sur une platine de support pneumatiquement servocommandée 39A. Cette platine de support est par exemple surmontée par un sous-ensemble 39B qui inclut un outil de positionnement 42 et un outil de mise en place de fiche 43. Ces deux outils sont ici montés latéralement par rapport à l'ensemble que forme l'outillage 39, l'outil 42 étant prévu pour permettre un positionnement précis de l'outillage et plus particulièrement de l'outil de tenue de fiche 43 par rapport à une embase. Ce positionnement précis est plus particulièrement prévu pour permettre d'insérer une fiche dans un élément de connexion ou éventuellement d'extraire une telle fiche d'un tel élément.

A cet effet le sous-ensemble 39B est monté et électriquement servocommandé pour se mouvoir, d'une part, en translation transversalement par rapport à la direction de déplacement longitudinal de la platine 39A, d'autre part, en rotation par rapport à un axe vertical, comme respectivement schématisé par la pointe et la queue de flèche situées en haut à droite du bloc représentant l'outillage 39 et par le fléchage curviligne placé au-dessus de ce bloc. La rotation du sous-ensemble 39B par rapport à un axe vertical est ici prévue pour permettre un changement d'orientation du bloc et plus précisément des outils 42 et 43 qu'il comporte. Elle est plus particulièrement prévue pour changer l'orientation du sous-ensemble de π/2.

Dans une forme préférée de réalisation le sous-ensemble 39B est assujetti sur la platine 39A par un montage en cloche lui permettant d'être tenu par le haut et de profiter des avantages connus apportés par les montages en cloche, en matière de facilité de déplacement de la partie suspendue.

L'outil de positionnement 42 comporte une tige 63 horizontalement tenue dont une extrémité 64 est façonnée, par exemple en pointe, pour faciliter son engagement dans une ouverture complémentaire, par exemple de type encoche ou trou, ménagée au niveau du répartiteur. Cet engagement permet un repérage physique des embases que le répartiteur comporte et donc de leurs éléments de connexion respectifs, pour permettre l'insertion d'une fiche dans un tel élément ou inversement son extraction. Il est alternativement possible de prévoir un repérage des embases par voie optique par exemple à l'aide de repères optiques tels qu'envisagés plus haut et d'un détecteur approprié, par exemple un détecteur optique de repères, du type à diodes.

L'outil de tenue de fiche 43 comporte un bras dont l'extrémité est équipée pour tenir horizontalement une fiche, supposée d'allure rectiligne, étant ici supposé que l'insertion d'une fiche dans un élément de connexion s'effectue horizontalement, lorsque l'embase concernée est en place dans le répartiteur. Dans une forme de réalisation, l'extrémité du bras comporte une pince de tenue de fiche 61 prévue pour venir chevaucher la fiche et la tenir, par exemple dans sa partie médiane de manière à laisser libres les extrémités de cette fiche. Il est prévu une rotation de l'outil de tenue de fiche selon un axe horizontal, comme schématisé par le fléchage curviligne réalisé au niveau de l'outil sur la figure 9.

Le châssis porte aussi l'outillage de stockage-distribution de fibre de jarretière et plus particulièrement une bobine 45 sur laquelle est bobinée une réserve de fibre de jarretière. Selon l'invention, il est prévu que la bobine soit partiellement déroulée à l'occasion de chaque jarretièrage entre deux éléments de connexion quelconques pour fournir la quantité de fibre nécessaire à la réalisation de la jarretière, en fonction du chemin fixé pour joindre ces deux éléments. Cette quantité de fibre déroulée correspond à la longueur de jarretière nécessaire à relier les deux éléments de connexion, sans que la fibre ne soit sous tension entre eux. Une surlongueur déterminée ajustée en fonction des besoins est prévue pour permettre d'obtenir des courbures de fibre de rayon approprié, en particulier pour chacun des deux éventuels changements de niveau existant lorsque les deux embases à relier ne sont pas horizontalement au même niveau. Dans l'exemple proposé l'outillage de stockage-distribution est positionné en partie haute du châssis dans une position lui permettant d'alimenter la tête de distribution 37 en fibre dans de bonnes conditions, lors des opérations de jarretièrage.

D'autres éléments, notamment des accessoires de l'ensemble d'outillages et de la logique de gestion programmée supervisant les opérations de jarretièrage au niveau du répartiteur, sont susceptibles d'être eux aussi portés par le châssis. Ceci concerne en particulier divers éléments de commande et, par exemple, une partie des circuits de supervision exploités par la logique de gestion programmée et divers organes, notamment une pince 46 de maintien de fibre en position.

La pince de maintien 46 est notamment destinée à être exploitée en cours de pose de fibre de jarretière, au long du chemin déterminé de manière programmée pour une telle fibre entre les éléments de connexion qu'elle doit réunir. Cette pince de maintien est plus particulièrement prévue pour maintenir une fibre à partir d'un point choisi en aval du premier élément de connexion auquel la fibre est reliée, lors de l'opération de pose qui permettra à cette fibre de rejoindre le second élément de connexion auquel elle doit être connectée, via les goulottes du répartiteur.

La pose d'une jarretière entre deux éléments de connexion déterminés appartenant à des embases différentes du répartiteur est réalisée par la suite d'opérations décrites ci-dessous.

Une première opération consiste à monter une fiche, complémentaire, de l'élément de connexion à une extrémité de fibre de jarretière.

Comme schématisé sur la figure 10, la fibre de jarretière J est stockée sur une bobine 45 de l'outillage de stockage et de distribution que contient le châssis mobile 44. La bobine 45 est préférablement montée sur un axe et il est prévu qu'elle puisse tourner dans les deux sens, sous l'action d'un moteur, de manière à pouvoir fournir de la fibre en se dévidant ou alternativement à pouvoir assurer un rembobinage, lorsque les opérations liées au jarretièrage le nécessitent.

Un ensemble de poulies 47, 47' et 47" est ici associé à la bobine 45, les deux premières poulies sont utilisées à des fins de régulation de débit, la poulie 47' servant de contrepoids de commande selon une technique bien connue.

La poulie 47" est préférablement une poulie motorisée équipée d'un codeur de mesure de la longueur de fibre distribuée. Elle est commandée par la logique de gestion évoquée plus haut pour fournir ou alternativement récupérer la fibre en fonction de la programmation de distribution mise en oeuvre au cours des opérations liées au jarretièrage.

La fibre J délivrée par la poulie motorisée 47" est introduite dans un tube de protection souple 49 où elle circule et par l'intermédiaire duquel elle est conduite jusqu'à la tête de distribution 37 de l'outillage de maniement de fibre.

Les deux sous-ensembles essentiels de cet outillage de maniement de fibre sont illustrés en liaison avec une pince 46 de maintien de fibre sur les figures 11 et 12, une petite partie d'une baie du répartiteur étant montrée en figure 12.

Cette partie de baie comporte deux tronçons appartenant à des goulottes 16B superposées, les faces avants de deux embases portées par les bras de support tel 19', où elles se logent et un premier des éléments guide-jarretière 17 associés aux deux goulottes 16B partiellement représentées.

Le premier sous-ensemble de l'outillage de maniement de fbre comporte une tête mobile de distribution 37 présentée dans deux positions différentes sur les figures 11 et 12. Cette tête de distribution est équipée d'une buse 50, ici d'allure coudée, dont une extrémité est agencée pour se connecter à l'extrémité du tube de protection 49 par l'intermédiaire duquel la fibre de jarretière lui est transmise. Dans la forme de réalisation illustrée, la seconde extrémité de cette buse 50 est disposée de manière à rester sensiblement horizontale pendant les opérations de jarretièrage, quelle que soit la position que prend alors la tête mobile de distribution qui la porte.

La tête de distribution 37 est articulée sur un élément intermédiaire 51 qui est, par exemple, un boîtier de servocommande 51 permettant de faire tourner partiellement la seconde extrémité de la buse par rapport à un axe ici supposé horizontal. Ceci a pour objet de faciliter les opérations de pose de fibre de jarretière au long du chemin que cette fibre suit pour joindre les deux éléments de connexion qu'elle doit interconnecter, ce chemin empruntant successivement deux goulottes qui appartiennent à des baies différentes dans le cas d'un répartiteur multibaie. L'orientation et la forme de la buse 50 sont déterminées de manière classique en matière de circulation de fil ou fibre pour permettre une dépose optimale d'une fibre au long du chemin qu'elle parcoure entre deux éléments de connexion, en particulier en phase d'introduction d'une fibre dans une goulotte.

Le boîtier de servocommande 51 est ici fixé à la partie inférieure du bras porteur 40 évoqué plus haut, dont il suit les déplacements de bas en haut entre une position haute qui est utilisée pour certaines opérations, en particulier, lorsque l'outillage 36 de montage d'une fiche sur une fibre est utilisé, et une position basse qui est notamment utilisée en phase de dépose de la fibre de jarretière au long du chemin entre deux éléments de connexion. La mise en position haute permet notamment à l'outillage de montage de fiche de venir se placer dans la partie centrale du châssis, lors du montage d'une fiche sur une extrémité de fibre.

Comme indiqué plus haut, les déplacements verticaux de la tête de distribution 37 et de sa buse 50 suivent ceux du bras de support 40 sur lequel cette tête est fixée par l'intermédiaire de son boîtier de servocommande 51. Dans l'exemple présenté, le bras support 40 est attaché sous le plafond, que constitue la partie médiane haute du châssis, par l'intermédiaire d'un dispositif qui permet à ce bras de se déplacer dans deux directions perpendiculaires. Ce dispositif comporte un rail de support 52 horizontal qui est transversalement disposé par rapport au châssis de manière à permettre à la tête de se déplacer d'avant en arrière par rapport au plan de référence, auquel le rail de support est ici perpendiculaire. Dans la réalisation proposée, le bras de support est supporté par un chariot 53 coulissant sous le rail de support 52 auquel ce chariot est accroché. Le bras de support 40 coulisse verticalement par rapport au chariot qui comporte une structure complémentaire appropriée 54. Comme déjà indiqué les divers déplacements envisagés ci-dessus sont servocommandés, ces servocommandes étant obtenues à l'aide de moyens connus, tels que vérins pneumatiques et/ou mécanismes électriquement motorisés.

Le second sous-ensemble de l'outillage de maniement de fibre comporte une pince 38 de préhension de fibre, comportant par exemple deux mors parallèles horizontalement disposés entre lesquels une portion de fibre peut être immobilisée. La pince 38 est ici fixée sous le plafond, que constitue la partie médiane haute du châssis, par l'intermédiaire d'un système de support 41 lui permettant de tourner à angle droit dans deux directions par rapport à une position médiane déterminée. Cette rotation d'axe vertical est ici supposée obtenue à l'aide de deux éléments rotatifs superposés qui sont alignés selon l'axe vertical de rotation dans le système de support 41 dont ils font partie, comme on le voit sur les figures 11 et 12. La position médiane déterminée est ici supposée choisie de manière que les mors de la pince 38 soient orientés parallèlement au plan de référence. L'un des éléments rotatifs porte la pince 38 et il est situé sous l'autre qui est fixé au plafond du châssis, par ailleurs il coulisse selon l'axe vertical évoqué ci-dessus pour amener la pince d'une position haute de dégagement à une position basse de travail.

La pince 38 peut se déplacer de manière à venir se placer devant la seconde extrémité de buse, lorsque celle-ci est dans une position déterminée, de manière à pouvoir venir chevaucher la fibre de jarretièrage qui sort de cette seconde extrémité et à immobiliser la partie de fibre chevauchée qui est alors située entre ses mors. Dans l'exemple envisagé, la pince 38 est supposée en position basse, avec ses mors perpendiculaires au plan de référence. La tête de distribution 37 est en position basse, à proximité de la position basse de pince. La seconde extrémité de la buse 50 est orientée perpendiculairement au plan de référence et en conséquence vers l'intervalle alors existant entre les mors de pince 38. L'écartement du premier sous-ensemble, comportant la tête de distribution et sa buse, par rapport au plan de référence, alors qu'une fibre sortant de cette buse est immobilisée entre les mors de la pince 38, se traduit par une sortie de fibre hors de la buse qui est fonction du déplacement réalisé. Dans la réalisation proposée, le déplacement du premier sous-ensemble s'accompagne de la fourniture d'une longueur de fibre appropriée par l'outillage de stockage et de distribution de fibre, à partir de la bobine 45. Le retour de la pince 38 par rotation à sa position médiane déterminée, suite à une immobilisation de fibre entre les mors de pince, permet d'amener la partie de fibre pincée à avoir une direction parallèle au plan de référence. La partie de fibre pincée peut être quelconque ou encore correspondre au tronçon d'extrémité de fibre, si le pincement se produit à la fin d'une phase opératoire où les sous-ensembles de l'outillage de maniement de fibre sont dans les positions indiquées ci-dessus, dans le cadre de l'exemple donné.

Le montage d'une fiche, telle 8' en figure. 2, à l'extrémité d'un tronçon d'extrémité de fibre immobilisé par les mors de pince 38 implique que la pince soit dans une position pour laquelle le tronçon immobilisé est parallèle au plan de référence.

Ce montage s'effectue par l'intermédiaire de l'outillage 36 de montage de fibre sur fiche évoqué plus haut qui se déplace vers le centre du châssis, à cette occasion. Ceci permet aux outils, que ce châssis porte, d'intervenir sur la fibre afin d'y monter une fiche.

Comme il est connu, le montage d'une fiche sur une fibre de jarretière nécessite des interventions, d'une part, sur la fibre, d'autre part sur la fiche. Ces interventions ont notamment pour objet d'éliminer partiellement la gaine qui entoure la fibre et pour façonner l'extrémité de fibre ainsi dénudée, en vue de sa mise en liaison avec une autre fibre. Elles ont aussi pour objet de mettre en position une fiche sur la partie de fibre dont l'extrémité a été façonnée et de l'y fixer. Ces diverses interventions sont réalisées automatiquement par l'intermédiaire des outils que comporte l'outillage 36 qui est une unité du genre de celle décrite dans le brevet américain 5999682 où il est divulgué une machine manuelle permettant de connecter automatiquement deux fibres optiques bout à bout par l'intermédiaire d'un module de connexion. Cette machine combine un certain nombre d'outils et notamment d'outils de préparation de fibre, par exemple à des fins de dénudage et de coupe de fibre, ainsi que de sertissage de module de connexion, qui peuvent être réutilisés avec un minimum d'adaptations pour constituer un ensemble permettant de monter une fiche sur une fibre, tel qu'envisagé dans la présente demande.

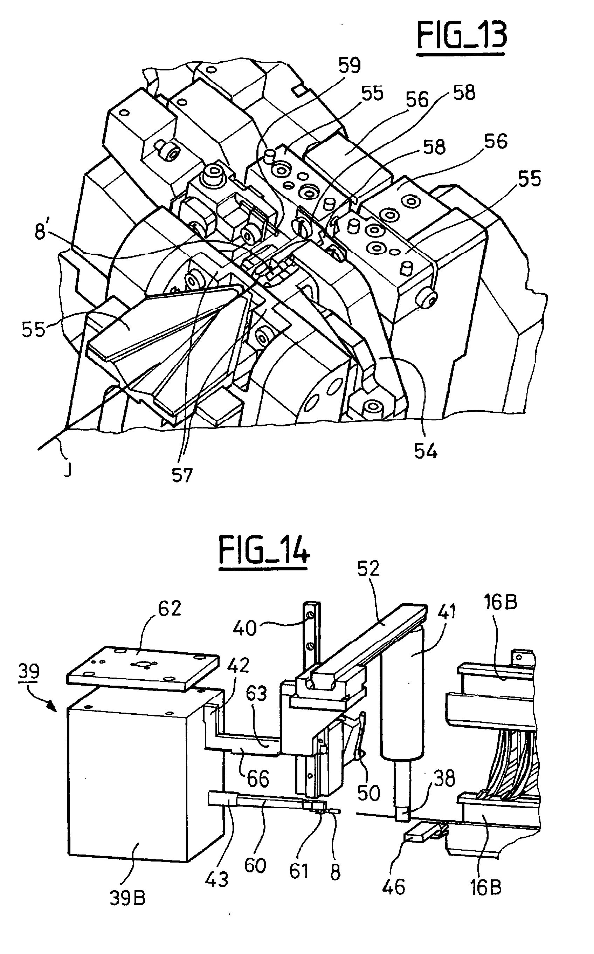

Une vue de dessus d'un ensemble de montage de fiche est présentée sur la figure 13. Il est prévu pour permettre de monter une fiche 8', d'allure tubulaire, à l'extrémité d'une fibre de jarretière J de manière que cette fibre traverse la fiche d'une extrémité à l'autre et puisse se raccorder à une autre fibre aboutissant de manière complémentaire à l'extrémité d'un élément de connexion comporté par une des embases du répartiteur. A cet effet, la fiche 8', à monter, est mise en place dans un dispositif de maintien 54 permettant de la tenir pour pouvoir y enfiler une fibre. Il est supposé que la fiche 8' comporte un conduit longitudinal prévu pour recevoir une fibre.

Le dispositif de maintien 54 est par exemple équipé de deux mors évidés qui sont pneumatiquement servocommandés et qui viennent latéralement prendre appui de part et d'autre de la fiche, sur la longueur de celle-ci, un de ces mors étant partiellement visible sur la figure 13.

La fibre tenue parallèlement au plan de référence par la pince 38, vient s'introduire dans un dispositif de guidage de fibre 55 du fait du déplacement de l'outillage 36 de montage de fibre sur fibre vers la partie centrale du châssis parallèlement au plan de référence. Le dispositif de guidage 55 est destiné à guider la fibre vers l'entrée du conduit longitudinal de la fiche alors immobilisée par le dispositif de maintien 54 dans une position déterminée. Ce dispositif de guidage comporte, par exemple, une rainure de guidage formant un V dont la pointe fait face à l'entrée de conduit évoquée ci-dessus d'une fiche immobilisée comme indiqué ci-dessus. Le fond de la rainure de guidage s'élève graduellement de l'embouchure, au niveau de laquelle pénètre la fibre, à la pointe du V. Dans une forme préférée de réalisation, la rainure de guidage est recouverte par un couvercle amovible, non représenté, permettant de rabattre la fibre introduite vers le fond de la rainure, si une courbure rémanente de la fibre résultant de son enroulement préalable sur la bobine 45, tend à faire sortir l'extrémité de cette fibre hors de la rainure.

Le déplacement de l'outillage de montage de fiche sur fibre vers la partie centrale du châssis se poursuit de manière que la fibre introduite dans le dispositif de guidage 55 vienne pénétrer dans le conduit longitudinal de la fiche 8' et la traverse de part en part de manière que l'extrémité de cette fibre sorte hors de la fiche d'une longueur suffisante pour qu'elle puisse venir se placer entre des mors mobiles d'un outil 56 d'immobilisation de fibre par pincement.

L'outil 56 est supposé servocommandé, il est prévu pour permettre de fixer l'extrémité de la fibre de jarretière courant dans la fiche, de l'autre côté de cette fiche par rapport au dispositif de guidage. Les mors qu'il comporte sont prévus pour se déplacer transversalement par rapport à la direction de déplacement de l'outillage.

Un outil de sertissage de fiche 57 permet de fixer la fiche sur la fibre de jarretière, ici au niveau de l'extrémité de cette fiche par laquelle la fibre est introduite.

Un outil de dénudage de gaine comportant deux vés mobiles de dénudage 58 est disposé entre l'extrémité de fiche d'où émerge la fibre et l'outil d'immobilisation de fibre 56. Il est pneumatiquement servocommandé et les vés, entre lesquels vient se placer la fibre alors gainée, viennent s'appuyer latéralement sur la gaine par un mouvement de rapprochement mutuel de manière à y pénétrer. Un retrait limité de l'outillage de montage de fibre sur fiche vers le bord du châssis entraîne le dénudage de la fibre sur une longueur déterminée qui est fonction du retrait effectué.

Un outil de coupe 59, venant se positionner au ras de l'extrémité de fiche d'où émerge la fibre se déplace transversalement par rapport à la direction de translation de l'outillage de montage de fiche sur fibre, il comporte un diamant venant couper la fibre au ras de la fiche, alors que cette fibre, tendue, est maintenue par le dispositif d'immobilisation.

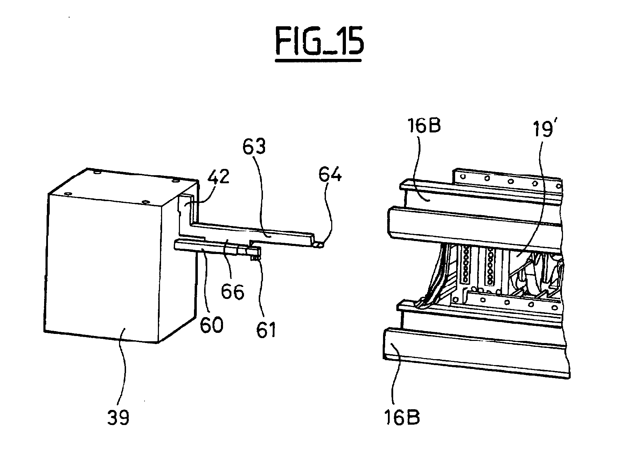

Après l'opération de coupe de fibre qui termine le montage d'une fiche sur une fibre, la fiche est prélevée par l'intermédiaire d'une pince de préhension 61 portée par l'outil de tenue de fiche 43 d'un outillage de maniement de fiche 39 montré sur les figures 14 et 15.

L'outillage 36 de montage de fibre sur fiche est alors ramené depuis la position pour laquelle il est à proximité du centre du châssis à la position de dégagement pour laquelle il en est éloigné.

La pince 61 fait partie de l'outillage de maniement de fiche 39 présenté sur les figures 14 et 15. Comme indiqué plus haut cet outillage comporte un sous-ensemble 39B qui est suspendu en cloche sous une structure porteuse, telle qu'une potence, cette structure étant uniquement représentée par un élément supérieur 62 sur la figure 14. La structure porteuse en forme de potence 39B est montée sur la platine 39A qui est mobile en translation parallèlement au plan de référence dans le bas du châssis où cette platine est logée, comme schématisé sur la figure 9.

La pince 61 est montée latéralement à l'extrémité d'un bras 60 en forme de tige de l'outil de tenue de fiche 43. Ce dernier est monté sur un support qui est ici supposé être un boîtier dans lequel est logé le dispositif de servocommande qui permet au bras de tourner à 90° autour de son axe longitudinal de part et d'autre d'une position médiane et de coulisser longitudinalement. La position médiane est prévue pour permettre à la pince 61 de saisir une fiche, entre deux mors parallèles qu'elle porte, en venant la chevaucher. Les mouvements propres au bras de l'outil de tenue de fiche 43 se combinent avec ceux imposés par la logique de gestion à l'outillage 39 lui-même pour permettre:
- la prise d'une fiche 8' montée sur une fibre J, à la fin d'une opération de montage réalisée à l'aide de l'outillage 36 ;
- le déplacement de cette fiche au niveau d'un élément de connexion situé dans une position déterminée au niveau du répartiteur ;
- l'orientation de la fiche dans une position permettant son insertion dans l'élément de connexion.

Dans la réalisation ici proposée, un mouvement de haut en bas du bras de l'outil de tenue dé fiche permet à la pince de venir saisir une fiche 8' au niveau de l'outillage 36 après montage de cette fiche sur une fibre et avant que l'outillage 36 ne quitte la position en zone centrale de châssis qu'il occupait lors des opérations de montage de la fiche.

La rotation du bras permet de positionner la fiche, tenue par la pince, à droite ou à gauche du bras en vue de son insertion dans un élément de connexion appartenant à une embase dans une baie, lorsque des éléments de connexion de cette embase sont déjà équipés de fiches et sachant qu'un élément guide-jarretière 17 borde latéralement chaque embase pour guider les fibres de jarretière connectées aux éléments de connexion de cette embase.

Dans l'exemple de réalisation ici envisagé, les éléments guide-jarretières d'une baie ont des courbures qui tendent à diriger les fibres de jarretière vers la zone de brassage 12 qu'elles viennent traverser.

Les éléments de connexion d'une embase sont alignés et latéralement bordés par deux éléments guide-jarretières courbes, tels que schématisés sur la figure 5, de ce fait la distance existant entre l'alvéole d'un élément de connexion d'une embase et un élément guide-jarretière n'est pas la même pour chacune des alvéoles d'une embase. De ce fait, la liberté de passage de la pince de tenue de fiche 61 à côté d'un élément guide-jarretière, pour l'insertion d'une fiche dans une alvéole ou pour son retrait, varie avec la position verticale de l'alvéole choisie au long de l'élément guide-jarretière. Ceci conduit à privilégier une position de pince par rapport à une autre vis-à-vis du bras de tenue de fiche qui porte cette pince. Cette position est préférablement choisie la même pour toutes les embases dont les éléments guide-jarretières ont même orientation et par exemple pour toutes les embases d'une même baie d'un répartiteur multibaie. Le bras 60 vient donc se positionner plus loin de la zone de brassage que la pince 61 par rapport à l'alvéole d'un élément de connexion d'une baie, lors d'une insertion d'une fiche dans cette alvéole, ou lors d'un retrait hors de cette alvéole.

Selon l'invention, le positionnement précis de l'outillage de maniement de fiche 39, pour une insertion de fiche ou alternativement pour un retrait au niveau d'un élément de connexion, est obtenu par utilisation de l'outil de positionnement 42 fixé au-dessus de l'outil de tenue de fiche 43 sur un côté du sous-ensemble 39B. A cet effet, l'outil 42 coopère avec les moyens de repérage qui sont prévus pour lui au niveau du répartiteur. Comme décrit plus haut en liaison avec la figure 5, ces moyens de repérage sont par exemple des trous 67 ou encore des encoches 68 régulièrement réparties au long des goulottes. L'extrémité 64 de l'outil de positionnement est conformée de manière à venir se positionner dans un trou ou dans une encoche de forme complémentaire dans le cadre d'une opération de déplacement de l'outillage 39 qui est contrôlée par la logique de gestion. Cette opération de déplacement permette d'amener l'outillage à hauteur du repère qui correspond à l'élément de connexion dans lequel une fiche est à insérer ou extraire. Elle se traduit par un déplacement de la platine de support de l'outillage 39 parallèlement au plan de référence jusqu'au niveau du repère, le sous-ensemble 39B étant placé ou amené dans une position, en retrait par rapport à ce plan de référence. Ce retrait est prévu pour permettre la rotation de l'outil de tenue de fiche 43 et de l'outil de positionnement 42 depuis une position où ils étaient parallèles au plan de référence jusqu'à une position pour laquelle ils lui sont perpendiculaires et ont leurs extrémités pointées vers lui. Le déplacement transversal du sous-ensemble 39B sur sa platine de support et en direction du plan de référence, permet alors à l'extrémité 64 du bras de positionnement de venir se loger dans le trou repère 67 correspondant à l'élément de connexion visé. La possibilité de réglage en hauteur existant au niveau de l'outil de tenue de fiche est exploitée pour amener la fiche portée par la pince au niveau de hauteur de l'élément de connexion visé dans la cas d'une opération d'insertion de fiche ou alternativement pour amener la pince à la hauteur de la fiche présente dans cet élément en cas de retrait.

Comme indiqué plus haut, lors d'une insertion de fiche, la pince est positionnée sur le côté de l'outil de positionnement, d'une manière qui permette à celui-ci de s'enfoncer perpendiculairement au plan de référence, jusqu'au moment où la fiche que porte la pince est convenablement insérée dans l'élément de connexion visé.

L'insertion est réalisée par une translation du bras 60 de l'outil 43 de tenue de fiche perpendiculairement au plan de référence, par exemple, sous l'action d'un vérin comporté par le sous-ensemble 39B (figure 9). Un ajustement relatif du positionnement d'une fiche, lors de son insertion dans un élément de connexion, est obtenu par un montage connu de pince qui offre une relative élasticité et qui évite une détérioration de la fiche, en cas d'alignement légèrement imparfait.

La pose d'une fibre de jarretière entre deux éléments de connexion d'un répartiteur, selon l'invention, est effectuée par une suite d'opérations qui sont décrites ci-dessous.

La première opération à réaliser consiste à monter une fiche sur une fibre de jarretière en vue de connecter cette fiche à un premier des éléments de connexion concernés. Cette opération se traduit par la mise en place d'une fiche 8', extraite d'un dispositif de stockage non représenté, dans une position déterminée de montage au niveau du dispositif de maintien 54 de l'outillage 36. Cette mise en place de fiche est suivie par l'introduction d'une extrémité d'une fibre de jarretière J, déroulée depuis la bobine de stockage 45 et distribuée par l'intermédiaire de la buse 50, dans le dispositif de guidage 55. L'introduction est réalisée avec l'aide de la pince 38 et par le déplacement de l'outillage 36 de montage de fiche sur fibre, vers la partie centrale du châssis 44. Le montage de la fiche implique un dénudage de la fibre à son extrémité, une découpe et/ou un façonnage de cette extrémité en vue de la mise en liaison bout à bout de cette fibre de jarretièrage avec une autre fibre, et une fixation de la fiche sur la fibre. Cette fixation est ici réalisée par sertissage d'une partie cylindrique de la fiche sur la fibre.

Une seconde opération consiste à venir positionner la fiche montée en extrémité de fibre dans un premier des deux éléments de connexion à interconnecter. A cet effet, la fiche est extraite hors du dispositif de maintien 54 à l'aide de la pince 61 que porte l'outil de tenue 43 de l'outillage de maniement de fiche 39, après un déplacement de cet outillage vers l'outillage de montage 36 de fiche sur fibre. Ce dernier est alors conduit en position de dégagement en extrémité de châssis dans la mesure où il ne doit plus être utilisé jusqu'au prochain montage de fiche.

Le positionnement de la fiche est réalisé par l'intermédiaire de l'outillage 39 de maniement de fibre, comme indiqué plus haut. La platine 39A est déplacée en translation parallèlement au plan de référence, le sous-ensemble 39B est déplacé vers l'arrière et tourné à angle droit pour que l'outil de positionnement 42 vienne face au plan de référence. Le bras 60 de l'outil 43 de tenue de fiche est soumis à une rotation selon son axe longitudinal qui amène la pince 61 à être latéralement disposée par rapport à la tige du bras. L'outil de positionnement et l'outil de tenue de fiche viennent au niveau correspondant à celui de l'embase visée dans le répartiteur. Un déplacement vers l'avant, c'est-à-dire vers le plan de référence du sous-ensemble 39B, permet un amarrage temporaire de ce sous-ensemble au répartiteur par l'intermédiaire de l'outil de positionnement 42, dans la position à atteindre demandée par la logique de gestion pour l'élément de connexion visé. Une translation de l'outil de tenue 43 vers l'élément de connexion 8 visé permet l'introduction de la fiche tenue par la pince 61 dans cet élément.

Pendant l'ensemble des déplacements mentionnés ci-dessus, il est assuré un déroulement de fibre et/ou éventuellement un réenroulement de fibre en fonction des besoins par l'outillage de stockage et de distribution de fibre sous le contrôle de la logique de gestion.

Une troisième opération consiste à mettre en place la fibre J depuis le premier élément de connexion visé où se trouve la première fiche installée jusqu'au niveau du second élément de connexion visé par le jarretièrage en cours de réalisation. A cet effet, il est prévu de faire déplacer la buse 50 de l'outillage de maniement de fibre au long du chemin défini par la logique de gestion entre les deux éléments de connexion. Selon l'invention ce chemin est systématiquement choisi avec au plus deux niveaux correspondants chacun au niveau vertical de la goulotte horizontale placée immédiatement au-dessous d'un des deux éléments de connexion concernés. L'éventuel changement de niveau nécessaire pour passer d'une goulotte à l'autre s'effectue au niveau de la zone de brassage 12 entre baies où la fibre de jarretière utilisée prend une forme en S avec deux coudes d'orientations opposées. Les coudes de changement de niveau sont localisés dans une zone de brassage qui est unique pour toutes les jarretières dans le cas d'un répartiteur à deux baies et qui peut être multiple dans le cas d'un répartiteur ayant un nombre de baies plus élevé, chaque jarretière n'ayant cependant que deux coudes de changement de niveau au plus.

La quantité de fibre de jarretière nécessaire à la réalisation d'une jarretière est débitée par l'intermédiaire de la poulie motorisée 48 de l'outillage de stockage-distribution de fibre avec un débit qui est contrôlé par la logique de gestion de manière à ne pas soumettre la fibre à des tractions au cours de la pose. La quantité de fibre débitée pour une jarretière peut être définie de manière que la jarretière réalisée soit légèrement plus longue que théoriquement nécessaire pour que les rayons des courbures subies par la jarretière sur son trajet correspondent à des valeurs déterminées.

Dans une forme de réalisation, une pince 46 déplaçable au long des goulottes permet d'immobiliser la portion d'une fibre déjà en place d'une manière temporaire et ponctuelle en fonction des besoins, le déplacement de cette pince et son action étant contrôlés par la logique de gestion en fonction du chemin de pose choisi pour une fibre et de l'état d'avancement de cette pose.

Le débit de fibre par la poulie motorisée 48 accompagne le déplacement des divers éléments constitutifs qui sont impliqués dans la pose et en particulier le déplacement vertical du châssis entre ses supports verticaux 34, le déplacement horizontal de ces supports au long du répartiteur et/ou les divers déplacements de la tête de distribution 37.

Ceci conduit donc la buse à venir placer la fibre sortant de la fiche en place dans le premier élément de connexion 8 visé, de manière à ce qu'elle suive intérieurement l'élément guide-jarretière 17, prévu à cet effet au long de l'embase comportant cet élément de connexion pour rejoindre la goulotte 16B située immédiatement sous cette embase. La buse poursuit sa pose dans la goulotte jusqu'à ce que celle-ci se termine dans le zone de brassage 12 entre baies. La quantité de fibre nécessaire à la formation des deux coudes opposés prévus au niveau de cette zone de brassage est débitée par la poulie motorisée 48 de l'outillage de stockage-distribution pendant que la buse se déplace verticalement dans le passage central prévu entre les guides 18B qui prolongent partiellement les goulottes au niveau de la zone de brassage pour les deux baies situées de part et d'autre de cette zone.

L'opération de pose se poursuit jusqu'au moment où la fibre déposée atteint le niveau du second élément de connexion où doit aboutir la fibre de jarretière en cours de pose. La fibre est alors temporairement immobilisée au niveau atteint par l'intermédiaire de la pince déplaçable 46 et il est prévu un débit de fibre suffisant par la roue motorisée 47" pour permettre le montage d'une seconde fiche sur la fibre après une coupure de cette fibre au ras de la buse 50 à un niveau de longueur suffisant pour permettre de terminer le jarretièrage, c'est-à-dire jusqu'à insertion de la seconde fiche dans le second élément de connexion.

La pince 61 est alors exploitée pour tenir la fibre et permettre sa coupe à la longueur choisie par la logique de gestion, cette coupe étant ici supposée réalisée par appui sur la fibre d'un relief de coupe saillant 66 que comporte le bras 60 à sa partie inférieure (figure 14). La seconde extrémité alors libre qui termine la partie de fibre de jarretière déjà posée est alors soumise à une opération au cours de laquelle une fiche 8' est montée sur elle de la manière précédemment décrite à l'aide de l'outillage 36 de montage de fibre sur fiche. A cet effet, la seconde extrémité libre de fibre est convenablement orientée au moyen de la pince 38 de manière à se présenter dans une position identique à la première extrémité de la fibre par rapport à l'outillage de montage de fiche sur fibre. Lorsqu'une fiche a été montée sur la seconde extrémité de fibre, il est réalisé une suite d'opérations de mise en position et d'insertion de la fiche nouvellement montée dans le second élément de connexion comme précédemment décrit pour la fiche montée à la première extrémité de la fibre de jarretière.

Comme il est connu, l'évolution du jarretièrage au cours du temps implique couramment le retrait de jarretières existantes pour permettre d'établir des liaisons entre des éléments de connexion qui ne sont plus ceux qui étaient reliés par les jarretières retirées. Il est prévu que ces opérations de retrait soient réalisées en exploitant les moyens que fournit l'ensemble d'outillages définis ci-dessus.

Le retrait d'une jarretière est facilité quel que soit le nombre de baies prévu pour un répartiteur par le fait qu'il n'y a que deux coudes de changement de niveau au plus au long du trajet suivi par la jarretière entre les embases au niveau desquelles elle est connectée et qu'il est possible de faire coulisser la jarretière, dont une extrémité a été débarrassée de sa fiche, par des tractions appropriées exercées au niveau de sa seconde extrémité.

Lors d'un retrait de jarretière entre deux éléments de connexion comportés par deux embase du répartiteur, il est prévu d'exploiter la pince de préhension 61 portée par l'outil de tenue de fiche 43 pour venir saisir la fiche 8' logée dans un premier des deux éléments de connexion concernés et pour l'extraire par un mouvement vers l'arrière de l'outil de tenue de fiche. Le positionnement préalable de l'outillage de maniement de fiche 39 et plus particulièrement de l'outil de tenue de fiche 43 par rapport à l'élément de connexion est réalisé comme précédemment prévu en phase de pose de jarretière en utilisant l'outil de positionnement 42 et par réalisation des divers déplacements du châssis 44 et/ou de l'outillage de maniement de fiche 39 qui ont déjà été envisagés plus haut pour le positionnement de l'outil de tenue de fiche 43 avant insertion d'une fiche dans un élément de connexion.

Le déplacement vers l'arrière de la fiche 8' tenue par la pince de préhension 61 est exploité pour permettre de couper la fibre au ras de la fiche par un déplacement l'amenant en appui contre une butée servant d'instrument de coupe.

Dans une forme de réalisation et si l'élément de connexion ne doit pas être immédiatement réutilisé, il est prévu de réintroduire la fiche qui vient d'être extraite dans l'élément de connexion où elle se trouvait de manière qu'elle vienne obturer l'alvéole de cet élément à des fins de protection, après avoir été séparée de la fibre sur laquelle elle était montée.

La pince de préhension 61 est amenée au niveau du second élément de connexion 8 par déplacement du châssis 34 et de l'outillage de maniement de fiche 39, de manière à se retrouver en une position lui permettant d'extraire la fiche 8' qui est alors insérée dans ce second élément de connexion. L'extraction est réalisée dans des conditions qui correspondent à celles ayant conduit à l'extraction du premier élément de connexion. La prise de préhension 61 se fixe sur la fiche à extraire avant d'être ramenée en arrière par un mouvement de rétraction de l'outil de tenue de fiche 43. Dans l'exemple proposé, il est prévu un mouvement de rotation du sous-ensemble 39B qui ramène les outils de positionnement et de tenue de fiche, ainsi que la fiche 8' dans une position où ils sont parallèles au plan de référence. Il est alors prévu d'extraire par traction le tronçon de fibre de jarretière qui reliait les deux éléments de connexion envisagés ci-dessus et qui subsiste alors dans les goulottes situées sur le chemin suivi par la fibre et au niveau de la zone de brassage entre baies.

Bien qu'il soit éventuellement possible d'effectuer le retrait manuellement par traction directe sur la fibre, il est prévu selon linvention d'utiliser l'une et/ou l'autre des deux pinces 38 et 61 pour maintenir la fibre immobilisée au niveau celle de ses deux extrémités sur laquelle est appliquée une traction. Cette traction est obtenue par déplacement servocommandé du châssis et/ou éventuellement de l'outillage 39 parallèlement au plan de référence et, par exemple, de la droite vers la gauche dans le cas d'un châssis comportant un outillage 39 dont l'outil de tenue de fiche 43 est orienté vers la droite, lorsque cet outil est parallèle au plan de référence, comme représenté sur les figures 14 et 15. L'extraction complète d'une fibre de jarretière peut éventuellement impliquer une coordination des actions des pinces 38 et 46 venant alternativement agripper la fibre de jarretière à extraire. La pince 38 permet de tirer la fibre au cours de d'un ou éventuellement de plusieurs déplacements successifs de même sens du châssis 44, ces déplacements étant séparés entre eux par un déplacement inverse du châssis ramenant la pince 38 à sa position de départ après qu'elle ait relâché la fibre. La pince 46 supposée positionnée près de la position de départ de la pince 38, telle qu'envisagée ci-dessus, permet alors d'immobiliser la fibre à proximité de cette position avant qu'elle ne soit relâchée par la pince 38. Le retour de la pince 38, alors relâchée, à sa position de départ près de la pince 46 lui permet d'agripper à nouveau la fibre près de cette pince 46. Le relâchement de la pince 46 suivie d'un nouveau déplacement de la pince 38 depuis sa position de départ permet d'extraire un tronçon supplémentaire de la fibre de jarretière, l'opération étant répétée jusqu'à extraction complète de cette fibre de jarretière.

## Revendications

1. Un répartiteur optique, à haute densité, pour l'interconnexion sélective de liaisons optiques par fibres au moyen de jarretières également constituées par des fibres optiques dans le cadre d'une installation de télécommunications où premièrement le répartiteur comporte des embases (6), qui sont disposées par rangées sur des éléments de support parallèles en une structure matricielle à deux dimensions et qui sont munies d'éléments de connexion individuels (8) pour les liaisons, et où deuxièmement chaque élément de connexion individuel d'une embase est agencé pour coopérer avec un élément de connexion complémentaire qui équipe l'extrémité d'une jarretière et qui vient se placer en face avant de l'embase, ledit répartiteur comportant au moins une baie de répartition (11A, 11B) sur un côté de laquelle est ménagée une zone (12) pour le passage des jarretières, celles-ci étant équipées d'éléments de connexion enfichables (8') à chacune de leurs extrémités afin de relier chacune un élément de jonction individuel d'une embase portée par un élément de support à un autre élément de jonction individuel d'une autre embase portée par un autre élément de support, ce répartiteur étant **caractérisé en ce que** lesdits supports d'embase sont montés en face avant de ladite baie de répartition (11A, 11B), ladite zone (12) de brassage étant ouverte vers l'avant pour recevoir les jarretières lors du jarretièrage qui est réalisé par un ensemble robotisé d'outillages spécialisés(33) apte à agir, se déplacer et se. positionner par rapport aux embases de manière à assurer :
- le montage d'une fiche à une extrémité d'une réserve de jarretière optique, bobinée, exploitée pour constituer les jarretières,
- la mise en position de cette fiche dans un premier élément de connexion individuel d'embase déterminé d'une baie,
- la mise en place de la jarretière débobinée depuis ce premier élément de connexion individuel déterminé et au travers de la zone de brassage jusqu'au niveau d'un second élément de connexion individuel déterminé d'une autre embase,
- l'ajustement en longueur de la jarretière débobinée et sa coupe la transformant en un tronçon séparé du reste de la jarretière encore bobinée,
- la mise en place d'une fiche à l'extrémité coupée du tronçon de jarretière débobiné,
- la mise en position de la fiche nouvellement montée en extrémité de tronçon dans le second élément de connexion.

2. Répartiteur optique, selon la revendication 1, dans lequel des moyens de repérage sont prévus au niveau de chaque baie pour permettre à l'ensemble d'outillages spécialisés de connaître la position de chaque point de connexion au niveau de chaque embase dans l'ensemble formé par toutes les embases du répartiteur, lesdits embases (6), identiques et disposées horizontalement sur des supports parallèles, tels que des profilés (13A, 13B), en face avant de baie, comportant des éléments de connexion (8) prévus pour coopérer avec des éléments de connexion complémentaires de, type fiche (8'), montés chacun à une extrémité d'une jarretière (J), qui viennent s'implanter en face avant (9) d'embase chacun dans l'une des alvéoles alignées verticalement des embases, lesdits moyens de repérage (67 ou 68) régulièrement espacés avec un pas correspondant à celle des embases, sur les supports parallèles où sont montées les embases, ou éventuellement sur des éléments du répartiteur qui sont fixement associés à ces supports, pour permettre de positionner au moins un outil de positionnement (42) d'un outillage de maniement de fiche (39) par rapport à un élément de connexion individuel d'embase du répartiteur, par déplacement automatisé de cet outil et/ou d'au moins certains des outillages de l'ensemble d'outillages spécialisés (33) dont il fait partie.

3. Répartiteur optique, selon la revendication 2, dans lequel les moyens de repérage comprennent des moyens pour assurer le positionnement d'un outillage de maniement de fiche (39) par rapport à un élément de connexion d'une embase, lesdits moyens mettant en oeuvre un outil de positionnement (42) muni d'un détrompeur (64) et associé à un outil de tenue de fiche (43) dans l'outillage de maniement de fiche, et au moins une forme (22A), complémentaire du détrompeur et ménagée à proximité de la face avant de chaque embase dans une zone où s'ouvre un logement (21) prévu pour cette embase dans un élément individuel de support par l'intermédiaire duquel cette embase se fixe sur un des supports parallèles, ledit détrompeur étant déplacé de manière à pénétrer dans la forme creuse complémentaire associée à une embase déterminée, lorsqu'une fiche équipant une jarretière doit être introduite ou extraite d'un élément de connexion individuel comporté par cette embase déterminé.

4. Répartiteur optique, selon l'une des revendications 1 à 3, dans lequel les jarretières (J) reliées par des fiches (8') à une embase (6) sont conduites de haut en bas depuis les éléments de connexion individuels (8) de cette embase par un élément guide-jarretière (17), dans une direction donnée, à l'intérieur d'une goulotte horizontale (16B) disposée au bas de la rangée où se trouve cette embase, pour être dirigées vers les embases auxquelles elles aboutissent par ailleurs et dans lequel les éléments guide-jarretières d'une baie sont tous agencés de manière à orienter les jarretières dans la direction de la zone de brassage (12) où lesdites jarretières sont dirigées par des guides (18A, 71A) qui prolongent partiellement les goulottes au niveau de la zone centrale et qui ménagent un passage central par l'intermédiaire desquelles les jarretières sont individuellement introduites dans la zone de brassage, au moyen d'un outil de placement de jarretière inclus dans l'ensemble d'outillages spécialisés que comporte le répartiteur, ledit outil et/ou ledit ensemble d'outillages ayant une possibilité de déplacement vertical entre les guides prolongeant les goulottes, au niveau de ce passage central, pour conduire chaque jarretière en zone de brassage entre les deux niveaux verticaux des goulottes horizontales desservant chacune une des embases auxquelles cette jarretière est reliée.

5. Répartiteur optique, selon la revendication 4, dans lequel les guides d'orientation des jarretières comportent des guides (18A, 18B), dits généraux, qui prolongent horizontalement les goulottes (16A, 16B) au niveau d'une zone de brassage (12) ménagée entre deux baies, qui sont galbés pour guider les jarretières vers l'intérieur de la zone et qui ménagent un passage vertical entre elles en face avant du répartiteur pour permettre l'introduction mécanique des jarretières une à une dans la zone de brassage et en ce qu'ils comportent des guides-torons (71A) qui sont galbés et qui prolongent les goulottes vers le bas de la zone de brassage pour orienter chacun un toron que constituent les jarretières circulant au travers d'une même goulotte.

6. Répartiteur optique, selon l'une des revendications 1 à 5, dans lequel le raccordement des fibres de liaison aux embases est réalisé par l'intermédiaire de modules de distribution et de connexion se logeant dans les baies se présentant sous la forme de cassettes (23) de lovage de fibres, individuellement articulées sur des éléments individuels de support qui se présentent chacun sous la forme d'un bras (19, 19') venant se fixer sur au moins un support parallèle (13B) de rangée d'embases par une extrémité où est ménagé un logement (21) pour une embase, chaque bras portant des moyens d'articulation (26) pour une cassette à une seconde extrémité et constituant un canal en U pour le passage et le maintien en place de fibres intermédiaires de liaison entre les éléments individuels de connexion (8) de l'embase (6), logée dans le bras, et les fibres de liaison (F), qui proviennent de câbles de transmission ou de distribution aboutissant au répartiteur et qui ont une extrémité lovée reliée par une épissure à une desdites fibres intermédiaires de liaison dans la cassette de lovage que porte le bras.

7. Répartiteur optique, selon la revendication 6, dans lequel les bras (19, 19') constituant les éléments individuels de support des embases (6) et les cassettes de lovage (23) au niveau d'une baie sont agencés pour pouvoir être assemblés par groupes rassemblant chacun les embases de deux rangées voisines qui sont fixées chacune sur deux supports parallèles (13B) dont l'un leur est commun et au long duquel les bras sont alternativement positionnés, l'un en dessus et le suivant en dessous, lesdits bras, identiques entre eux, étant doublement coudés en sens inverse dans deux dimensions et préférablement à mi-longueur, pour permettre aux cassettes de lovage, respectivement portées par des bras alternés de part et d'autre d'un des supports parallèles qui est commun à un groupe, d'être disposées dans un même alignement à l'intérieur de la baie, lorsqu'elles sont en position d'exploitation, du fait de l'alignement des éléments d'articulation (26) pour cassettes que comportent ces bras alternés de part et d'autre d'un même support commun et des dimensionnements respectifs des cassettes et des bras.

8. Répartiteur optique, selon la revendication 6, dans lequel chaque bras comporte, à sa seconde extrémité, un élément d'articulation (26) pour cassette qui constitue un axe destiné à être horizontal lorsque le bras est en place dans le répartiteur, cet élément saillant latéralement d'un prolongement plan du fond du canal en U pour fibres intermédiaires que forme le bras, de manière à libérer le passage pour ces fibres intermédiaires vers l'intérieur de la cassette que porte le bras, quelle que soit la position de cette cassette par rapport au bras qui la porte.

9. Répartiteur optique, selon l'une des revendications 6 à 8, dans lequel chaque cassette (23), constituée d'un boîtier, ouvert, à fond plat, d'allure symétrique par rapport à un plan transversal médian, à l'intérieur duquel sont ménagées des structures (24) de lovage de fibres et des moyens d'immobilisation (31) pour des épissures entre fibres, comporte des éléments d'articulation (28, 28'), telles que des portées pour axe, complémentaires de l'élément d'articulation (26) porté par un bras de support (19), qui sont symétriquement disposés par rapport au plan transversal au niveau des extrémités d'un des grands côtés du boîtier que forme la cassette et qui sont préférablement réalisés pour pouvoir venir latéralement et élastiquement s'articuler sur un élément d'articulation porté par un bras, chacun des éléments d'articulation complémentaires comportés par une cassette étant entouré par deux conduits (29, 30 ou 29', 30') pour fibres, un premier de ces conduits (30 ou 30'), réalisé vers l'intérieur de la cassette par rapport à l'autre et à l'élément d'articulation complémentaire (28 ou 28') qu'il jouxte, étant destiné au passage des fibres intermédiaires vers le conduit du bras portant la cassette, lorsque celle-ci est portée par l'intermédiaire de l'élément d'articulation complémentaire que ce premier conduit jouxte, le second de ces conduits (29 ou 29'), réalisé vers l'extérieur de la cassette par rapport au premier conduit et à l'élément d'articulation complémentaire qu'il jouxte, étant destiné au passage des fibres émanant de câbles de transmission ou de distribution qui sont raccordées à la cassette, chaque cassette s'articulant par l'un ou l'autre de ces deux éléments d'articulation complémentaires (28 ou 28') suivant celui des deux montages possibles prévus pour le bras (19 ou 19') dans le groupe dont il fait partie.

10. Répartiteur optique, selon l'une des revendications 1 à 9, dans lequel les éléments de connexion individuels raccordés par les jarretières sont portés par des embases (6) situées sur des baies (11A, 11B) différentes et au niveau desquelles ces jarretières (J) aboutissent par l'intermédiaire de goulottes (16A, 16B) horizontales , chaque jarretière étant affectée d'au plus deux coudes de changement de niveau dans une zone de brassage (12) située entre les baies concernées pour passer du niveau d'une des goulottes à celui de l'autre.

11. Répartiteur optique, selon l'une des revendications 1 à 10, incluant un ensemble robotisé (33) qui est composé d'outillages spécialisés servocommandés portés par un châssis (44) mobile, dont le déplacement est servocommandé par une logique de gestion programmée de manière à être mobile devant les faces avants des baies du répartiteur où sont alignées les faces avants respectives des embases dont les éléments de connexion sont destinés à être reliés entre eux par l'intermédiaire de fibres optiques de jarretière en point à point, ledit châssis portant au moins :
- un outillage de stockage et de distribution de fibre optique de jarretière au niveau duquel une bobine de fibre (45) est stockée en vue de permettre la réalisation de jarretières une par une, avec une longueur propre déterminée en fonction des positions réelles des deux éléments de connexion à interconnecter ;
- un outillage (36) multifonctions, servocommandé, de montage de fiche sur fibre, permettant de réaliser les différentes opérations nécessaires au montage d'une fiche de connexion, complémentaire d'un élément de connexion comporté par une des embases du répartiteur, à une extrémité de la fibre issue de l'outillage de stockage et de distribution de fibre optique de jarretière ;
- un outillage de maniement de fibre, composé de deux sous-ensembles respectivement chargés de distribuer la fibre de manière déterminée au cours des diverses opérations liées au jarretièrage et de la saisir, plus particulièrement à proximité d'une extrémité pour orienter et/ou positionner cette extrémité d'une manière prédéterminée, le premier sous-ensemble se caractérisant par la présence d'une tête mobile de distribution (37) équipée d'une buse par l'intermédiaire de laquelle la fibre est fournie, le second sous-ensemble se caractérisant par une pince (38) mobile en hauteur et partiellement rotative qui permet de saisir la fibre afin de déplacer une de ses extrémités à des fins de positionnement ;
- un outillage de maniement de fiche (39), permettant de saisir une fiche montée sur une fibre, de la déplacer et de la connecter par enfichage dan un élément de connexion ayant une position déterminée dans le répartiteur en phase de jarretièrage, ou de l'extraire, en phase de retrait.

12. Procédé de jarretièrage d'un répartiteur optique permettant l'interconnexion sélective de liaisons optiques par fibres au moyen de jarretières également constituées par des fibres optiques dans le cadre d'une installation de télécommunications où le répartiteur comporte des embases, qui sont disposées par rangées sur des éléments de support parallèles en face avant d'au moins une baie de répartition (11A, 11B) définissant en une structure matricielle à deux dimensions et qui sont munies d'éléments de connexion individuels pour les liaisons, et où chaque élément de connexion individuel d'une embase est agencé pour coopérer avec un élément de connexion complémentaire enfichable qui équipe l'extrémité d'une jarretière et qui vient se placer en face avant de l'embase, ledit procédé étant **caractérisé en ce que** la pose d'une jarretière entre deux éléments individuels de connexion appartenant à des embases différentes du répartiteur est réalisée par l'intermédiaire d'un ensemble robotisé d'outillages spécialisés (33) qui assure la succession d'opérations suivantes :
- montage d'une fiche à une extrémité d'une réserve de jarretière optique bobinée, exploitée pour constituer les jarretières,
- mise en position de cette fiche dans un premier élément de connexion individuel d'une embase déterminée d'une baie,
- mise en place de la fibre de jarretière débobinée depuis ce premier élément de connexion individuel déterminé, jusqu'au niveau d'un second élément de connexion individuel déterminé d'une autre embase,
- ajustement en longueur de la jarretière débobinée et coupe pour la transformer en un tronçon séparé de la réserve de jarretière encore bobinée,
- mise en place d'une fiche à une extrémité du tronçon de jarretière débobinée
- mise en position de la fiche nouvellement montée en extrémité de tronçon dans le second élément de connexion.

13. Procédé, selon la revendication 12, dans lequel il est prévu pour le déjarretièrage:
- retrait d'une des fiches de la jarretière à éliminer à l'aide de l'outillage de maniement de fiche après positionnement de cet outillage au niveau de l'organe de connexion individuel où se trouve la fiche à retirer,
- séparation de la fiche retirée de l'extrémité de la jarretière où elle était placée, par bris de la jarretière à proximité de cette extrémité au moyen de l'outillage de maniement de fiche,
- retrait de la seconde fiche de la jarretière à éliminer à l'aide de l'outillage de maniement de fiche après positionnement de cet outillage au niveau de l'organe individuel où se trouve la seconde fiche à retirer,
- traction sur la fibre pincée au niveau de ladite seconde fiche pour extraire cette fibre par un mouvement tendant à la faire coulisser au long du trajet où elle s'étendait et hors de la zone de brassage qu'elle traversait.

14. Procédé, selon la revendication 13, dans lequel la traction de retrait est exercée sur la fibre immobilisée par une pince de l'ensemble d'outillage, par translation d'au moins la partie qui comporte la pince de l'ensemble de l'outillage.
